Europäisches Patentamt

European Patent Office

Office européen des brevets

(19)

(11) Veröffentlichungsnummer : **0 034 267**
**B1**

(12) **EUROPÄISCHE PATENTSCHRIFT**

(45) Veröffentlichungstag der Patentschrift :
15.08.84

(51) Int. Cl.³ : **B 29 C 17/07**

(21) Anmeldenummer : **81100467.0**

(22) Anmeldetag : **22.01.81**

(54) **Maschine zur Herstellung geblasener Kunststoff-Hohlkörper.**

(30) Priorität : **22.01.80 DE 3002191**
**03.10.80 DE 8026528 U**

(43) Veröffentlichungstag der Anmeldung :
**26.08.81 Patentblatt 81/34**

(45) Bekanntmachung des Hinweises auf die Patenterteilung : **15.08.84 Patentblatt 84/33**

(84) Benannte Vertragsstaaten :
**AT CH FR GB IT LI**

(56) Entgegenhaltungen :
**DE-A- 1 778 404**
**DE-A- 2 024 802**
**DE-A- 2 028 326**
**DE-A- 2 204 395**
**DE-A- 2 212 077**
**DE-A- 2 413 880**
**DE-A- 2 516 911**
**DE-A- 2 544 832**
**FR-A- 1 390 106**
**FR-A- 2 206 169**
**FR-A- 2 272 818**
**FR-A- 2 274 427**
**US-A- 4 122 141**

(73) Patentinhaber : **Frohn, Walter Dr.-Ing.**
**Geiselgasteigstrasse 100**
**D-8000 München 90 (DE)**

(72) Erfinder : **Frohn, Walter Dr.-Ing.**
**Geiselgasteigstrasse 100**
**D-8000 München 90 (DE)**

(74) Vertreter : **Lamprecht, Helmut, Dipl.-Ing.**
**Corneliusstrasse 42**
**D-8000 München 5 (DE)**

**Beschreibung**

Die Erfindung betrifft eine Maschine zur Herstellung geblasener Kunststoff-Hohlkörper mit einem Maschinenbett, mit einer Abgabevorrichtung für einen Vorformling, insbesondere zur Abgabe über einen Extruderkopf, mit einer Blasformschließeinheit zur Aufnhame der Formhälften einer in einer vertikalen Ebene geteilten Blasform an je einem Blasformträger, wobei die Blasformschließeinheit zwischen einer oberen, unterhalb der Abgabevorrichtung befindlichen Vorformling-Übergabepositon und einer unteren, gegenüber der Übergabeposition abgesenkten Blasposition bewegbar ist, mit mindestens einem für den Blasvorgang in die Blasöffnung der in der Blasposition befindlichen Blasform einführbaren Blasdorn und mit einer Nachbehandlungsvorrichtung für den geblasenen Hohlkörper.

Die Herstellung von Kunststoff-Hohlkörpern, beispielsweise von Kunststoff-Flaschen, erfolgt üblicherweise aus einem in vertikaler Richtung nach unten aus einem Extruderkopf extrudierten, plastifizierten Schlauchstück, welches von den beiden horizontalen gegeneinander beweglichen Formhälften einer zweigeteilten Blasform eingeklemmt wird, wobei dann vertikal von oben nach unten ein Blasdorn in die ihm zugeordnete Ausnehmung der Blasform und zugleich in die ihm zugewandte Öffnung des abgetrennten Schlauchstücks einfährt. Der Blasdorn formt den Flaschenhals und kalibriert dabei den Innendurchmesser sowie die obere Stirnfläche des Flaschenhalses.

Die Produktionskapazität der Maschinen der anfangs erwähnten Bauart, wie sie z. B. in der DE-A-1 778 404 oder der FR-A-2 206 169 beschrieben ist, ist zwar zunächst von der maximalen Arbeitsgeschwindigkeit der Maschine abhängig, doch läßt sich diese Geschwindigkeit praktisch meist nicht ausnützen, weil der ausgeformte, aus der Blasform kommende Hohlkörper — zumindest mindest in der Boden- und Halspartie — noch so plastisch und deshalb noch so verformbar ist, daß eine direkt anschließende Nachbehandlung des Hohlkörpers, z. B. Entgraten und Dichtheitsprüfung, in positionierter Stellung nicht möglich ist. Dabei wird unter « positionierter Stellung » eine genau definierte, von allen aufeinanderfolgend produzierten Hohlkörpern präzise eingenommene Stellung verstanden, die allein es ermöglicht, daß die mit dem Hohlkörper zusammenwirkenden Werkzeuge mit hoher Genauigkeit auf die Hohlkörper einwirken. Aus diesen Gründen muß bei bekannten Maschinen eine Verlangsamung des Produktionsablaufs vorgenommen werden, damit die Hohlkörper für die Nachbehandlung ausreichend abkühlen um bei der Nachbehandlung Deformationen und damit Ausschuß zu vermeiden.

Es liegt der Erfindung deshalb die Aufgabe zugrunde, trotz einer relativ langsamen Bewegung des teilweise noch plastischen Hohlkörpers aus der Form die Wirtschaftlichkeit einer derartigen Maschine zu erhöhen, wobei vor allem eine Verringerung der Verlustzeiten, der Zykluszeit insgesamt, insbesondere der Standzeit der Blasform-Schließeinheit, und des Energiebedarfs angestrebt wird.

Diese Aufgabe soll dabei nach Möglichkeit derart gelöst werden, daß die Maschine einfach bedienbar und bei Bedarf schnell umrüstbar ist, daß die Investitionen in Bezug auf Antriebsmittel und den Regelungs- und Steuerungsaufwand gering gehalten werden können, und daß zudem eine exakte Produktion mit gleichbleibender Qualität erzielbar ist.

Die Lösung der gestellten Aufgabe besteht darin, daß bei einer Maschine der anfangs erwähnten Bauart ein taktweise angetriebener Drehteller mehrere gleichmäßig über den Umfang verteilte Aufnahmen für die geblasenen Hohlkörper besitzt und durch einen Taktantrieb zwischen einer in der Teilebene der Blasformschließeinheit angeordneten Übernahmeposition und mehreren Folgestationen, darunter mindestens einer Nachbehandlungsstation, bewegbar ist, daß der Blasdorn die geblasenen Hohlkörper von der Blasposition zur Übernahmeposition überbringt und von einem Blasdornschlitten getragen wird, der horizontal in der Teilebene der Blasform-Schließeinheit zwischen der Blasposition und der Übernahmeposition beweglich und in der Blasposition im Maschinenbett indexierbar ist, und daß die Blasform-Schließeinheit horizontale Führungen für die Blasformträger nur an der vom Blasdornschlitten abgewandten Seite besitzt.

Damit ergibt sich die Möglichkeit, nach dem Öffnen der Blasform die Schließeinheit sofort wieder in die Vorformling-Übergabeposition zu überführen, selbst wenn sich der Blasdorn mit dem daran befindlichen Hohlkörper noch nicht bzw. noch nicht vollständig aus der Blasposition entfernt hat. Da zwar im Takt der Übernahme des Vorformlings durch die Schließeinheit, aber ohne die Notwendigkeit rascher Beschleunigung, die Übergabe des geblasenen Hohlkörpers an den Drehteller erfolgt, der zur Erzielung einer ausreichenden zusätzlichen Nachkühlung des Hohlkörpers aus dem Drehteller mit einer angemessenen Zahl von Aufnahmen für die Hohlkörper versehen werden kann, wird eine maximale Ausnützung der Produktionskapazität bei hoher Wirtschaftlichkeit einerseits und hoher Präzision und damit geringem Ausschuß andererseits ermöglicht, weil sowohl ein schonender Transport des zumindest teilweise noch plastischen Hohlkörpers, als auch eine zuverlässige Abkühlung auf dem Drehteller während einer ausreichenden Anzahl von Taktschritten bis zur Nachbehandlungsstation möglich ist.

Durch den Kalibriervorgang am Flaschenhals und dem bei der Abkühlung der Kunststoff-Flasche entstehenden Schrumpfspannungszustand um den Blasdornschaft haftet die Flasche nach der Öffnung der Blasform aus diesem Blasdornschaft.

Aus der FR-A-2 274 427 ist es zwar bekannt, den geblasenen Hohlkörper durch den Blasdorn aus der Blasposition zu bewegen und ihn an eine Stützform zur Auskühlung zu übergeben. Dabei wird zunächst durch einen Spritzvorgang in einer ersten Form um den Blasdorn ein Vorformling gespritzt. Nach dem Öffnen der ersten Form wird der Blasdorn an der der Spritzdüse gegenüberliegenden Unterseite der ersten Form nach unten bewegt, worauf zwischen den abgesenkten Blasdorn und die erste Form eine geöffnete Blasform bewegt wird, in die durch Anheben des Blasdorns der Vorformling übergeben wird. Der Blasdorn verbleibt im Vorformling und bläst ihn in der Blasform zur gewünschten Form. Anschließend übergibt der Blasdorn den geblasenen Hohlkörper in ähnlicher Weise an eine Stützform, in der der Hohlkörper auskühlen kann. Zur Verlängerung der Kühlzeit kann der Hohlkörper aus der Stützform noch an eine taktweise drehbare Vorrichtung übergeben werden, wobei die Vorrichtung in den Hohlkörper einfahrbare Greiber besitzt, die durch Anheben der drehbaren Vorrichtung in den Hohlkörper eingefahren werden können und nach dem Erfassen des Hohlkörpers wieder abgesenkt werden. Es ist auch möglich, die Stützformen auf einer taktweise drehbaren Vorrichtung anzuordnen.

Bei der bekannten Vorrichtung finden verhältnismäßig umständliche Bewegungen statt, welche die Zykluszeit durch hohe Verlustzeiten belasten, obwohl der geblasene Hohlkörper der Blasform entnommen wird, um diese unabhängig von einer langen Kühlzeit vor dem Abkühlen des Hohlkörpers wieder für den Blasvorgang einsetzen zu können.

Wegen der in fast allen Fällen notwendigen Hinterschneidungen im Bodenbereich der Blasformnester besteht bei der horizontalen Öffnung der zweiteiligen Blasform die Gefahr, daß der Hohlkörper entweder in dem Formnest der einen oder der anderen Blasformhälfte hängen bleibt.

Um die kontinuierliche Extrusion des Schlauches nicht zu behindern, wird die Blasform nach dem Schließen um ein extrudiertes Schlauchstück sofort aus dem Bereich unter dem Extruderkopf in eine Blasposition bewegt, aus der sie erst dann in die Position unmittelbar unter dem Extruderkopf zurückbewegt wird, wenn die Form geöffnet und der geblasene Hohlkörper aus der Form entfernt worden ist.

Falls der geblasene Hohlkörper im Formnest hängen bleibt, wird die Bewegung der geöffneten Blasform zum Extruderkopf hin behindert. Der geblasene Hohlkörper wird zerstört, Beschädigungen an der Blaseinrichtung können auftreten und die gemäß der gestellten Aufgabe angestrebte Steigerung der Wirtschaftlichkeit, insbesondere die Beschleunigung der Zykluszeit, wird nicht erreicht. Zur Überwindung dieses Problems besteht eine besonders vorteilhafte Ausgestaltung darin, daß der Blasöffnung gegenüberliegend eine zweite Öffnung in der Blasform ausgebildet ist, und daß an einem Träger ein in die zweite Öffnung einführbares Halteelement angeordnet ist.

Beim Schließen der Blasform um das extrudierte Schlauchstück bildet der unterhalb der Formnester befindliche Abschnitt des Schlauches, welcher beim Schließen der Blasform zusammengequetscht wird, den sogenannten Bodenbutzen, der nach dem Öffnen der Blasform mit dem erzeugten Hohlkörper noch verbunden ist und der anschließend abgetrennt werden muß. Bei der vorstehend beschriebenen Konstruktion bildet sich der Bodenbutzen im Bereich der zweiten Öffnung, wobei während des Blasvorgangs das Halteelement in die zweite Öffnung und damit in den Bodenbutzen eingeführt wird. Wird die Blasform geöffnet, so wird der geblasene Hohlkörper von oben durch den Blasdorn und von unten durch das Halteelement festgehalten und damit zuverlässig aus den Formnestern gelöst, wobei der Hohlkörper in seiner definierten vertikalen Blasposition verbleibt.

Eine besonders zweckmäßige Ausführungsform besteht darin, daß der Träger des Halteelements am Blasdornschlitten angebracht ist. Dies hat den Vorteil, daß der geblasene Hohlkörper nach dem Öffnen der Blasform in einer genau positionierten Lage aus der Blasposition in die Übernahmeposition überführt werden kann.

Vorzugsweise ist das Halteelement dornförmig ausgebildet und entsprechend einer weiteren zweckmäßigen Ausgestaltung um eine zu seiner Bewegungsrichtung in die bzw. aus der zweiten Öffnung parallele Achse drehbar, so daß es durch eine drehende Bewegung in den Bodenbutzen eingeführt und vor allem durch eine schonende drehende Bewegung aus dem Bodenbutzen gelöst werden kann, was beim Lösen aus einem gegebenenfalls noch plastischen Formling Beschädigungen vermeidet.

Eine andere vorteilhafte Ausgestaltung besteht darin, daß die Bewegung der Blasformschließeinheit, des Blasdornschlittens und des Drehtellers über einen geschlossenen, kombinierten Kurventrieb zwangläufig von einer gemeinsamen Antriebseinheit abgeleitet ist.

Damit wird sichergestellt, daß trotz hoher Arbeitsgeschwindigkeiten in Teilbereichen der Maschine alle Bewegungsabläufe in stets gleichbleibender Synchronisation ablaufen, und daß insbesondere sich zeitlich überlappende Bewegungen zur Verkürzung der Zykluszeit möglich sind, weil es nicht mehr erforderlich ist, das Ende einer bestimmten Bewegung abzuwarten, bevor eine weitere Bewegung mit Sicherheit vor Kollisionen eingeleitet werden kann.

Noch eine weitere sehr vorteilhafte Ausgestaltung ist es, daß die Blasformschließeinheit in senkrechter Richtung über eine hydropneumatische Gewichtsausgleichsvorrichtung abgestützt ist.

Durch diese Gewichtsausgleichsvorrichtung, wie auch durch den Antrieb über den kombinierten Kurventrieb, dessen Kurvenverlauf mathematisch so festlegbar ist, daß die auftretenden Beschleunigungs- und Verzögerungskräfte trotz kurzer Bewegungszeiten einen stoß- und schwingungsfreien Bewegungsablauf zulassen, und der allein wegen der rollenden Reibung zwischen den Kurven und den ihnen zugeordneten Laufrollen, insbesondere aber beim Betrieb im Ölbad einen außerordentlich geringen Verschleiß aufweist, ergibt sich eine beachtliche Reduzierung des Energieaufwands im Vergleich zu bisher bekannten Maschinen, sowie eine Reduzierung der erforderlichen Investitionen für Antriebsmittel und Regelungs- und Steuerungseinrichtungen.

Weitere vorteilhafte Ausgestaltungen der Erfindung ergeben sich aus den Unteransprüchen in Verbindung mit der nachfolgenden Beschreibung.

In der Beschreibung eines in der Zeichnung dargestellten Ausführungsbeispiels der Erfindung wird diese anhand der Herstellung extrusions-geblasener Kunststoff-Flaschen näher erläutert.

Es zeigt :

Figur 1 einen schematischen Grundriß der Maschine insgesamt,

Figur 2 eine schematische Seitenansicht der Maschine in Richtung des Pfeils II in Fig. 1,

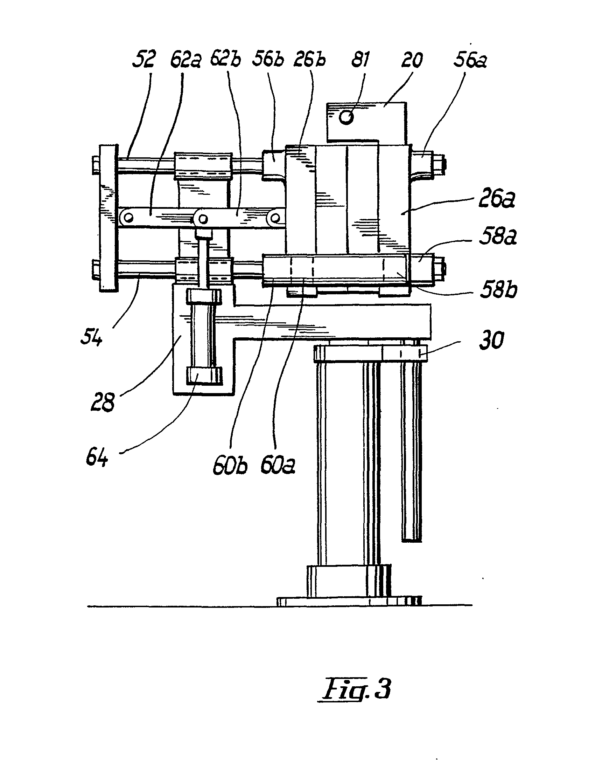

Figur 3 eine schematische Ansicht in Richtung des Pfeils III in Fig. 1 auf die in Blasposition befindliche, geschlossene Blasformschließeinheit mit dem Schließmechanismus,

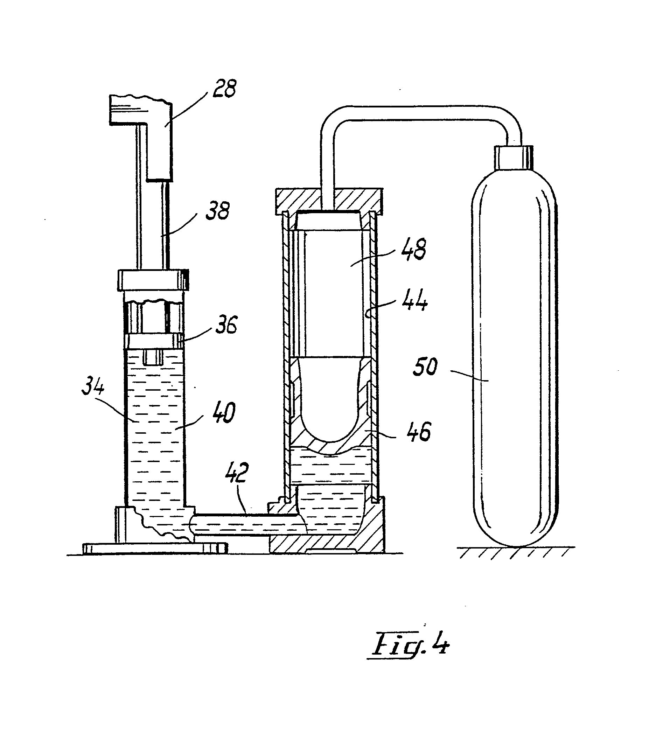

Figur 4 eine schematische, teilweise geschnittene Seitenansicht der Gewichtsausgleichsvorrichtung für die Blasformschließeinheit gesehen in Richtung des Pfeils II in Fig. 1, wobei zum besseren Verständnis die Gasflasche in die Zeichnungsebene versetzt ist,

Figur 5 eine der Fig. 2 ähnliche Seitenansicht mit schematischer Darstellung des Kurventriebs für die Hubbewegung der Blasformschließeinheit, die horizontale Translationsbewegung des Blasdornschlittens und die schrittweise Bewegung des Drehtisches mit dem als Kraftquelle dienenden Motor und Nockenschieben zur Kontaktgabe für zusätzliche Steuerbefehle,

Figur 6 eine schematische Seitenansicht auf den Betätigungsmechanismus für eine Hohlkörperaufnahme am Drehtisch,

Figur 7 eine teilweise geschnittene Draufsicht auf den in Fig. 6 dargestellten Betätigungsmechanismus,

Figur 8 eine Einzelheit zur Darstellung in Fig. 7,

Figur 9 einen Schnitt nach der Linie IX-IX in Fig. 7,

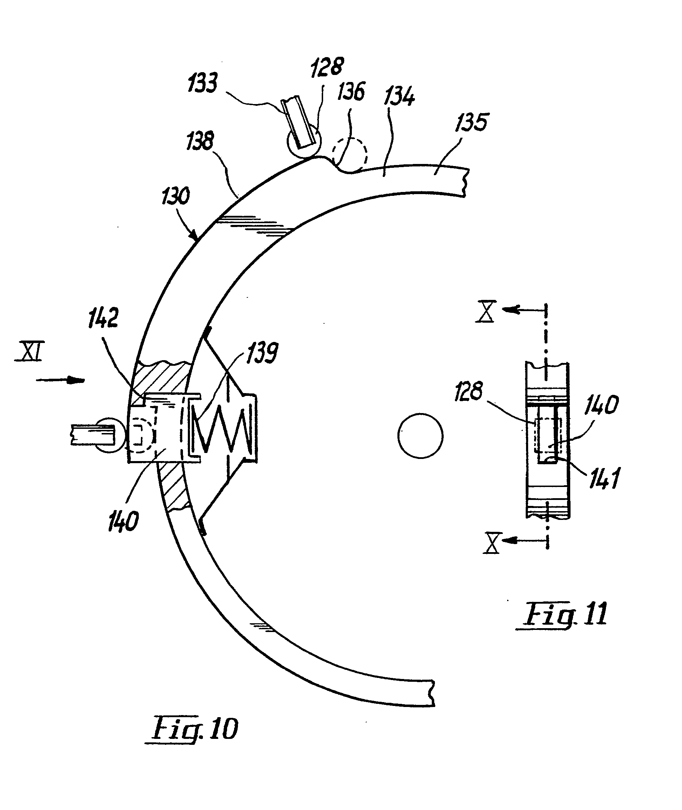

Figur 10 eine schematische Teilansicht des Laufkranzes des Betätigungsmechanismus nach den Fig. 6 und 7, teilweise geschnitten nach der Linie X-X in Fig. 11,

Figur 11 eine Ansicht in Richtung des Pfeils XI in Fig. 10,

Figur 12 eine graphische Darstellung der Bewegungsabläufe und der Schaltvorgänge während einer Umdrehung der Hauptantriebswelle,

Figur 13 eine schematische Darstellung der möglichen Ausgestaltung der mit einer innenliegenden Hubkurve versehenen Scheibe zur Steuerung der Vertikalbewegung der Blasformschließeinheit,

Figur 14 eine schematische Schnittdarstellung durch eine geöffnete Blasform mit dem zu übernehmenden, extrudierten Schlauchstück,

Figur 15 eine der Fig. 14 entsprechende Darstellung bei geschlossener Blasform vor dem Einfahren des Blasdorns,

Figur 16 in vergrößertem Maßstab das untere Ende der Blasform im geschlossenen Zustand und mit dem Halteelement in Betriebsstellung,

Figur 17 einen Detailschnitt nach der Linie XVII-XVII in Fig. 16 und

Figur 18 eine etwas vergrößerte Detaildarstellung aus Fig. 2.

Die dargestellte, auf einem Maschinenbett 20 angeordnete Blasmaschine besteht im wesentlichen aus drei miteinander gekoppelten Einheiten, und zwar einer vertikal auf und ab bewegbaren Blasformschließeinheit 10, einem um eine vertikale Achse drehbaren, schrittweise antreibbaren Drehteller 12 mit mehreren gleichmäßig über seinen Umfang verteilten, zweiteiligen Formmasken 14 als Aufnahmen für die geblasenen Hohlkörper zur weiteren Auskühlung und zur Nachbehandlung, z. B. zum Entgraten und zur Dichtheitsprüfung usw., sowie einem zwischen der Blasformschließeinheit 10 und dem Drehteller 12 horizontal hin und her bewegbaren Blasdornschlitten 16, der gleichzeitig dem Transport der geblasenen, flaschenförmigen Hohlkörper aus der Blasformschließeinheit 10 zum Drehteller 12 dient. Zur Erzeugung der an die Blasformschließeinheit zu übergebenden Vorformlinge dient ein nur durch seinen Extruderkopf 22 dargestellter Extruder unter dessen Extruderkopf 22 die Blasformschließeinheit 10 angeordnet ist.

Die eine zweiteilige Blasform 24 tragende Blasformschließeinheit 10 ist mit zwei horizontal gegeneinander beweglichen Formträgern 26a und 26b versehen, deren jeder eine Hälfte der Blasform 24 aufnimmt. Die Blasformträger 26a und 26b werden beweglich von einer Führungskonsole 28 getragen, die über eine Vertikalführung 30 auf und ab beweglich gelagert ist, wobei diese Bewegung in später noch erläuterter Weise von einem Kurventrieb abgeleitet wird. Zur Entlastung des Kurventriebs und zur Einsparung von Energie ist die Führungskonsole 28 über eine hydropneumatische Gewichtsausgleichsvorrichtung 32 abgestützt.

Diese Gewichtsausgleichsvorrichtung 32 umfaßt einen in einem Zylinder 34 beweglichen Kolben 36, der über eine Kolbenstange 38 mit der Führungskonsole 28 verbunden ist und der sich nach unten auf eine Drucköffüllung 40 abstützt, die über eine am unteren Ende des Zylinders 34 angeschlossene Verbindungsleitung 42 mit einem Druckspeicher 44 in Verbindung steht, in dessen oberem Bereich, von der Drucköffüllung 40 durch z. B. einen Kolben 46 getrennt, ein Gaspolster 48 angeordnet ist, das aus einer Druckgasflasche 50 ergänzt werden kann. Die Trennfläche zwischen dem Gaspolster 48 und der

Drucköffüllung 40 ist wesentlich größer als die Fläche des Kolbens 36, so daß bei einer Vertikalbewegung der Blasformschließeinheit 10 der Druck des Gaspolsters 48 nicht wesentlich verändert wird und damit das Gewicht der Blasformschließeinheit 10 während der Vertikalbewegung sehr weitgehend ausgeglichen werden kann.

In der Führungskonsole 28 sind zwei vertikal übereinander angeordnete, horizontal verlaufende Führungsholme 52 und 54 verschieblich gelagert, die mit dem Formträger 26a verbunden sind und auf denen der Formträger 26b verschieblich gelagert ist. Hierzu ist jeder Formträger 26a und 26b an seiner vom Blasdornschlitten 16 abgewandten Seite mit jeweils einem oberen Führungslager 56a bzw. 56b und zwei im Abstand voneinander angeordneten unteren Führungslagern 58a und 60a bzw. 58b und 60b versehen, wobei sich zur stabilen Abstützung der beiden Formträger 26a und 26b die einander zugewandten unteren Führungslager 60a bzw. 60b gegenseitig so weit übergreifen, daß sie einen der Öffnungsbewegung der Form 24 entsprechenden Abstand voneinander aufweisen.

Durch diese Führungsanordnung ergibt sich der später noch näher erläuterte Vorteil, daß die Blasformschließeinheit nach der Öffnung der Blasform 24 gegen den Extruderkopf 22 angehoben werden kann, wenn sich der Blasdornschlitten 16 noch nicht aus dem Bereich der Blasformschließeinheit 10 entfernt hat.

Zur Betätigung der Blasformschließeinheit 10 dient ein durch zwei Lenker 62a bzw. 62b kniehebelartig auf die Blasformträger 26a und 26b einwirkender Hydraulikzylinder 64, der über Steuernocken auf der Welle des später noch erläuterten Kurventriebs ansteuerbar ist.

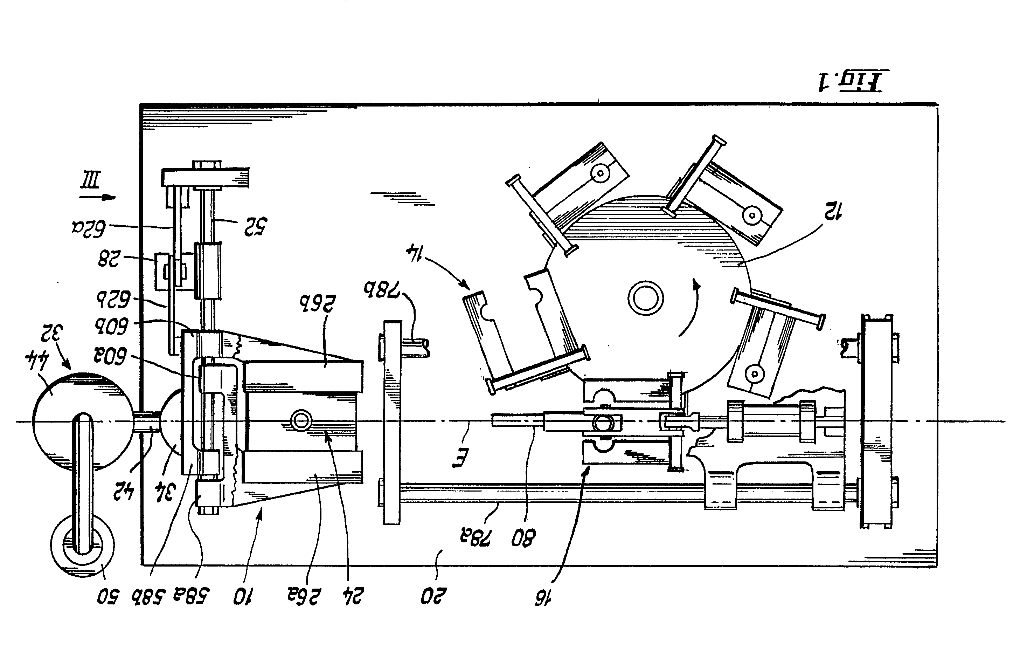

In der in Fig. 1 mit E gekennzeichneten Formteilebene der Blasform 24 ist beweglich ein Blasdorn 66 angeordnet, und zwar in einer Vertikalführung 68 am Blasdornschlitten 16. Durch einen auf dem Blasdornschlitten 16 angeordneten, durch ein Strömungsmittel betätigbaren Zylinder 70, der wieder über einen mit dem Kurventrieb in Verbindung stehenden Steuernocken ansteuerbar ist, wird ein Winkelhebel 72 betätigt, dessen vom Zylinder 70 abgewandter Schenkel 73 einen Schlitz 74 besitzt, in welchen ein Zapfen 76 am Blasdorn 66 eingreift, um entsprechend dem vom Steuernocken gegebenen Befehl den Blasdorn zu heben oder zu senken. Das Steuerventil für die Blasluft wird ebenfalls über einen solchen Steuernocken gesteuert.

Der Blasdornschlitten 16 ist auf zwei zur Formteilebene E parallelen, vorzugsweise horizontalen Führungsholmen 78a und 78b verschieblich gelagert, wobei seine Bewegung in noch zu beschreibender Weise vom Kurventrieb abgeleitet wird. In der Blasposition greift ein am Blasdornschlitten 16 angebrachter Indexbolzen 80 in eine ihm zugeordnete Indexbohrung 81 am Maschinenbett 20 ein, um den Blasdorn 66 präzise gegenüber der Blasform 24 festzulegen.

In seiner von der Blasposition abgewandten anderen Endstellung ist der Blasdornschlitten 16 derart gegenüber dem Drehteller 12 positioniert, daß sich der Blasdorn 66 in der Teilebene einer Formmaske 14 befindet, die in der sog. Übernahmeposition des Drehtisches 12 verweilt. Es wird nun zunächst der Produktionsablauf bis zur Übergabe eines Hohlkörpers an den Drehteller 12 beschrieben.

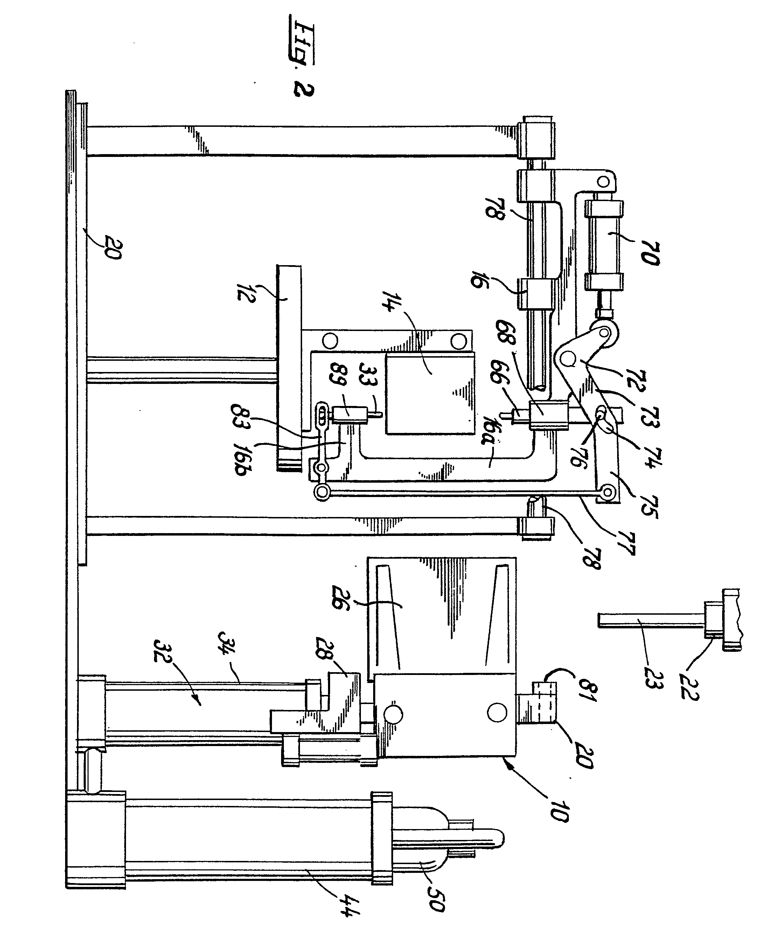

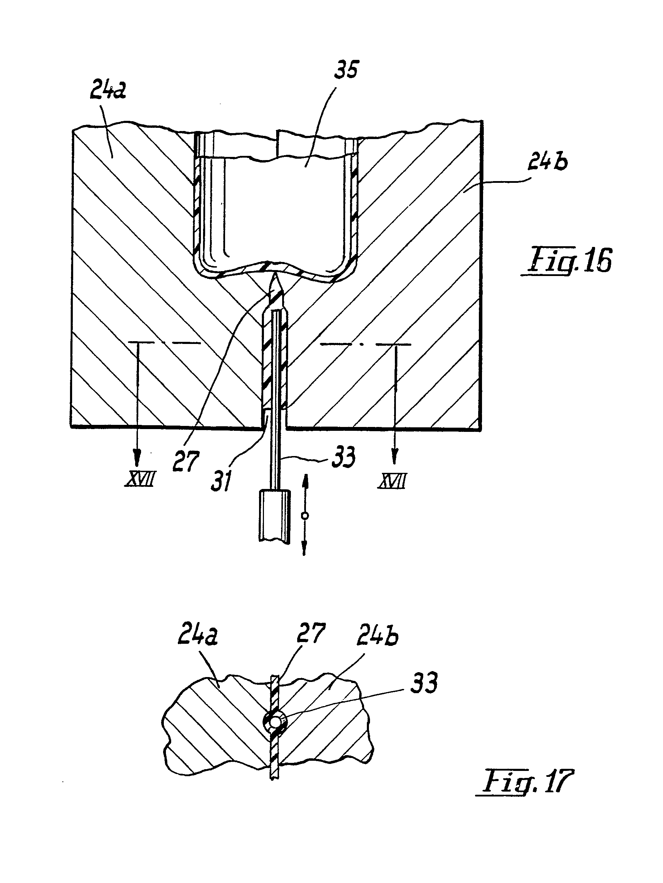

In Fig. 14 wird in Richtung der Zeichnungsebene der Fig. 2 eine Ansicht auf die geöffnete Blasform gezeigt, zwischen deren beiden Blasformhälften 24a und 24b ein aus dem Extruderkopf 22 extrudiertes Schlauchstück 23 zu sehen ist.

In den beiden Formhälften 24a und 24b sind jeweils Formnester 25a bzw. 25b ausgebildet, in welche nach dem Schießen der Blasform 24 der Schlauch 23 eingeblasen wird.

Die Fig. 15 zeigt die Blasform 24 in ihrer geschlossenen Stellung, wobei der Schlauch 23 sowohl im Bereich des den Flaschenhals formenden Abschnitts der Formnester 25a und 25b, als auch unterhalb des den Boden der Flasche formenden Abschnitts der Formnester eingedrückt ist. Im unteren Bereich, d. h. unterhalb des Bodens der zu erzeugenden Flasche ist der Schlauch zum sogenannten Bodenbutzen 27 zusammengepreßt.

Wie weiter aus Fig. 15 ersichtlich ist, wird nach dem Schließen der Blasform 24 und dem Abtrennen des von der Form übernommenen Schlauchstücks von dem aus dem Extruderkopf 22 kontinuierlich austretenden Schlauch, und nach dem Bewegen der Blasform 24 aus dem Bereich des Extruderkopfs 22, nämlich durch Absenken der Blasformschließeinheit 10, der am Blasdornschlitten 16 angebrachte Blasdorn 66 über die obere Öffnung 29 der Formnester 25a und 25b bewegt, in welche der Blasdorn 66 zur Kalibrierung der Flaschenmündung und zur Durchführung des Blasvorgangs eingeführt wird.

Dieser ersten Öffnung 29 liegt eine zweite Öffnung 31 gegenüber, welche den bereits erwähnten Bodenbutzen 27 aufnimmt.

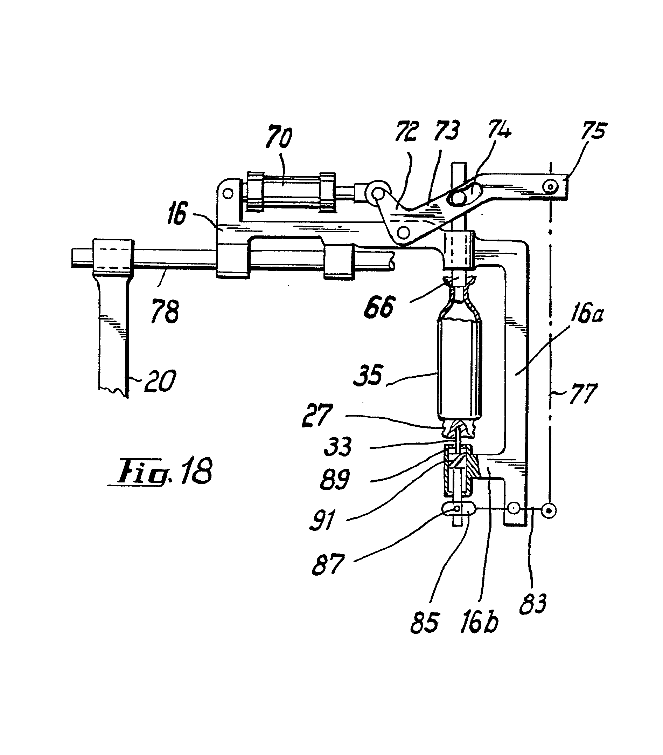

Wie deutlicher aus den Fig. 16 und 17 entnehmbar ist, wird in den Bereich der zweiten Öffnung 31 ein dornförmiges Halteelement 33 eingeführt, welches in den Bodenbutzen 27 eindringt.

Die Blasformschließeinheit 10 befindet sich während der Ausformung und Abkühlung der Kunststoff-Flasche in der untersten Stellung, der Blasposition, wobei die Blasform 24 geschlossen und der Blasdorn 66 noch in der Halsöffnung der zu erzeugenden Flasche angeordnet ist.

Nach Ablauf der vorgegebenen Zeit für die Abkühlung der Flasche im Inneren der Blasform 24 erfolgt in dieser Blasdornposition die Schnellentlüftung des Hohlkörpers über den Blasdorn 66 durch Betätigung eines Ventils, das über einen Steuernocken des Kurventriebs angesteuert wird. Anschließend wird sofort die Blasformschließeinheit 10 geöffnet, wobei der geblasene, flaschenförmige Hohlkörper mit seinem Flaschenhals noch am Schaft des Blasdorns 66 hängt und das Halteelement 33 in den Bodenbutzen 27 eingreift. Nach dem Öffnen der Blasform 24 wird demnach der geblasene Hohlkörper 35 in seiner Lage gegenüber dem Blasdornschlitten 16 durch den Blasdorn 66 und das Halteelement 33 festgehalten, welches in nachstehend noch näher erläuterter Weise ebenfalls am Blasdornschlitten 16 gelagert ist. Wird nun der Blasdornschlitten 16 in der Formteilebene aus der geöffneten Form 24 in horizontaler Richtung in die aus Fig. 2 ersichtliche Stellung überführt, kann eine genau positionierte Übergabe des geblasenen Hohlkörpers an die in der entsprechenden Aufnahmestellung des Drehtellers 12 befindliche Formmaske 14 erfolgen.

Durch die formschlüssige Verbindung des geblassenen Hohlkörpers 35 mit dem Blasdorn 66 einerseits und dem Halteelement 33 andererseits ist sichergestellt, daß beim Öffnen der Blasform 24 der Hohlkörper 35 sich allseitig von der Blasform 24 löst, so daß Beschädigungen des geblasenen Hohlkörpers 35 wie auch der Blaseinrichtung verhindert werden.

Die horizontale Bewegung des Blasdornschlittens 16 ist so begrenzt, daß der Blasdorn 66 sich in seiner einen Endstellung über der ersten Öffnung 29 der Blasform 24 befindet, während er in seiner anderen Endstellung den geblasenen Hohlkörper 35 in einer zur Übernahme durch die Formmaske 14 geeigneten Position ausrichten.

Der Hebelarm 73 ist über den Bereich des Schlitzes 74 hinaus verlängert und am Ende dieser Verlängerung 75 gelenkig mit einem Zugglied 77 verbunden, welches sich im wesentlichen vertikal nach unten erstreckt. Der Blasformschlitten 16 ist mit einer Lagerung 68 versehen, in welcher vertikal beweglich der Blasdorn 66 angeordnet ist. Über den Bereich dieser Lagerung 68 hinaus ist der Blasdornschlitten 16 mit einer bügelförmigen Verlängerung 16a nach unten erweitert, wo er an einem Arm 16b eine Führung 89 für das Halteelement 33 trägt, die fluchtend zur Lagerung 79 für den Blasdorn 66 angeordnet ist, so daß die bügelförmige Verlängerung zwischen der Lagerung 79 und der Führung 89 in der Seitenansicht etwa U-förmig erscheint. Unterhalb des Armes 16b ist an der Verlängerung 16a ein zweiarmiger Hebel 83 gelagert, an dessen einem Ende gelenkig das Zugglied 77 angreift, während das andere Ende des Hebels 83 über einen Schlitz 85 mit einem Zapfen 87 am Halteelement 33 in Eingriff steht.

Wie aus Fig. 18 ersichtlich ist, wird bei einer Stellbewegung mittels des Zylinders 70, welche den Winkelhebel 73 in Fig. 18 im Uhrzeigersinn verschwenkt, der Blasdorn 66 vertikal nach unten bewegt, während sich das mit dem Halteelement 33 in Eingriff befindliche Teilstück des Hebels 83 nach oben bewegt und somit das Halteelement 33 in den Bodenbutzen 27 drückt. Im Inneren der Führung 89 ist ein nicht näher dargestellter Vorsprung angeordnet, welcher in eine Spiralnut 91 am Halteelement 33 derart eingreift, daß bei der Übertragung einer Vertikalbewegung auf das Halteelement 33 dieses Halteelement 33 zugleich eine Drehbewegung in der Führung 89 ausführt. Zweckmäßigerweise wird hierzu die Kupplungsverbindung zwischen dem Hebel 83 und dem Halteelement 33 in bekannter Weise derart ausgebildet, daß die Drehbewegung des Halteelements 33 nicht behindert wird.

Bei der beschriebenen und gezeigten Ausführungsform wird also das Halteelement 33 gleichzeitig mit dem Blasdorn 66 mit dem Kunststoffmaterial innerhalb der Blasform 24 in Eingriff gebracht und verbleibt in Eingriff mit dem fertigen Blaskörper, bis nach dem Öffnen der Blasform 24 der Blasdornschlitten 16 in seine andere Endstellung überführt worden ist und der geblasene Hohlkörper von einer der Formmasken 14 übernommen worden ist.

Das Halteelement 33 ist vorzugsweise mit rundem Querschnitt derart ausgeführt, daß es sich in Richtung auf die Blasform 24 konisch verjüngt. Hierdurch wird das Eindringen in den Bodenbutzen 27 bzw. das Herausziehen erleichtert.

Sofort nach der Öffnung der Blasformschließeinheit 10 bewegt sich diese zwangläufig vom Kurventrieb betätigt in ihre obere Endlage, die Schlauchübergabeposition, unter den kontinuierlich einen Kunststoffschlauch extrudierenden Extruderkopf 22, um durch Schließen der Blasformschließeinheit den mittlerweile produzierten Vorformling in Gestalt eines Schlauchstücks zu übernehmen, welches dann in üblicher Weise durch ein Schlagmesser oder eine glühende Schneide abgetrennt wird.

Nach der Schlauchtrennung wird die Blasformschließeinheit mit der geschlossenen Blasform 24 wieder vertikal in die Blasposition überführt, aus deren Bereich inzwischen der den Hohlkörper tragende Blasdorn 66 herausbewegt wurde. Nach der Öffnung der Blasform 24 in der Blasposition hat sich der Blasdornschlitten 16 zum Drehteller 12 hin in Bewegung gesetzt, wobei diese Bewegung ohne allzuhohe Beschleunigung eingeleitet werden kann, weil wegen der einseitigen Führung der Blasformträger 26a und 26b die Blasformschließeinheit 10 unabhängig von der augenblicklichen Position des Blasdornschlittens 16 nach oben bewegt werden kann, sobald die Blasform 24 geöffnet ist.

Die horizontale Bewegung des Blasdornschlittens 16 endet in der dem Drehteller 12 zugeordneten Übernahmeposition, in der sich die in dieser Übernahmeposition befindliche, zunächst geöffnete Formmaske 14 um den Hohlkörper schließt, dessen Mantelfläche bis dahin erkaltet und damit ohne Deformation erfaßbar ist. Nun wird der Haltedorn 33 aus dem Bodenbutzen 27 entfernt und zugleich der Blasdornschaft durch Betätigung des Zylinders 70 aus dem Flaschenhals nach oben herausbewegt und anschließend wieder in die Blasposition über die inzwischen in diese Blasposition abgesenkte Blasformschließeinheit 10 bewegt, wobei diese horizontale Bewegung nun ohne Rücksicht auf den geblasenen Hohlkörper wesentlich rascher ablaufen kann. Nach dem Eingriff des Indexbolzens 80 in die Indexbohrung 81 wird durch erneute Betätigung des Zylinders 70 der Blasdorn 66 vertikal nach unten in die Mündung des von der Blasform 24 eingequetschten Schlauchstücks eingeschossen und der Blasvorgang eingeleitet.

In dieser Stellung verharrt die Blasformschließeinheit in Abhängigkeit von einem einstellbaren Zeitglied nur solange, bis die Flasche in der Blasform 24 soweit abgekühlt ist, daß nach dem Öffnen der Blasform 24 ein Transport der am Blasdorn 66 hängenden Flasche zum Drehteller 12 hin ohne Deformationsgefahr möglich ist. Bei Einwegflaschen mit normaler Wandstärke aus den in der Praxis bekannten « verblasbaren » Thermoplasten und unter Zugrundelegung einer guten Formkühlung darf als minimale Kühlzeit 4-5 Sekunden angesetzt werden.

Nach der Übernahme der geblasenen Flasche vom Blasforn 66 in eine Formmaske 14 bewegt sich der Drehteller 12 um einen Taktschritt, z. B. um 60° bei sechs gleichmäßig über den Umfang des Drehtellers 12 angeordneten Formmasken 14. In dieser Stellung verharrt der Drehtisch 12, bis die nachfolgende, in die Übernahmeposition gewanderte Formmaske wieder einen geblasenen Hohlkörper übernommen hat, worauf sich ein weiterer Taktschritt anschließt.

Die sich aus dem Taktschritt und der zwischen zwei aufeinanderfolgenden Taktenschritten befindlichen Stillstandsphase des Drehtischs 12 zusammensetzende Taktdauer entspricht genau einer Zyklusdauer der Blasformschließeinheit 10. Die Zykluszeit für eine Einwegflasche aus Hart-PVC setzt sich beispielsweise aus der sog. Nebenzeit (ca. 2,5 Sekunden) und der absolut erforderlichen Kühlzeit in der Blasform 24 (ca. 4,5 Sekunden) zusammen, was für diesen Hohlkörper eine Zykluszeit von ca. 7 Sekunden ergibt.

Die Zahl der Taktschritte über den Drehteller-Umfang, d. h. die Zahl der Formmasken, sollte jedoch aus Kostengründen nicht größer sein als unbedingt erforderlich für das zusätzliche Abkühlen der Hohlkörper vor dem Entgraten, eine Dichtheitsprüfung und die Abgabe der Flaschen. Praktisch wird man Drehteller mit 5 oder maximal 6 Formmasken verwenden.

Bei fünf Formmasken 14 auf dem Drehteller, was einem Taktwinkel von 72° entspricht, wird sich folgende Verteilung der Stillstandspositionen, d. h. der Arbeitsstellungen des Drehtellers 12 ergeben :

Station a : Übernahmeposition zur Übernahme der Flaschen vom Blasdorn 66,
Station b : zusätzliche Nachkühlung,
Station c : zusätzliche Nachkühlung,
Station d : Entgratung mit anschließender Dichtheitsprüfung,
Station e : Abgabe der Flaschen mit Aussonderung möglicherweise defekter Flaschen.

Dabei erhält der Hohlkörper eine zusätzliche Nachkühlung, deren Dauer der doppelten Zykluszeit entspricht, wobei der sich in der Umgebungsluft befindliche Hohlkörper, falls erforderlich, in der noch plastischen Boden- und Halspartie noch zusätzlich angeblasen werden kann. Der Hohlkörper erfährt dabei eine so intensive Auskühlung, daß er problemlos entgratet und auf Dichtheit geprüft werden kann. Man erreicht dadurch gegenüber herkömmlichen Blasmaschinen eine Steigerung des Ausstoßes um 25 bis 30 %, weil nunmehr eine solche Produktionsgeschwindigkeit der Blasformschließeinheit gewählt werden kann, die nur eine Formstabilität der geblasenen Flasche im Rumpf voraussetzt und trotzdem eine positionierte Weitergabe der Flasche zu den Nachbearbeitungspositionen ermöglicht.

Wie sich aus dem später noch näher erläuterten Bewegungsdiagramm ergibt, ist die Transportzeit für die am Blasdorn 66 hängende Flasche so bemessen, daß die auftretenden Massenkräfte keine Deformation im Bereich des Flaschenhalses bewirken können.

Wie bereits mehrfach erwähnt wurde, wird die Vertikalbewegung der Blasformschließeinheit 10, die horizontale Transportbewegung des Blasdornschlittens 16 und die Taktbewegung des Drehtellers 12 im Zwanglauf von einem Kurventrieb abgeleitet, der nachfolgend erläutert wird.

Diesem geschlossenen, kombinierten Kurventrieb ist ein Motor 82 als Antriebsquelle zugeordnet, und zwar ein drehzahlregelbarer Gleichstrommotor mit Thyristorsteuerung, der mit konstantem Drehmoment über einen Schneckentrieb die Hauptantriebswelle 84 des Kurventriebs antreibt. Ein positioniertes Stillsetzen des ganzen Kurventriebs wird durch eine an sich bekannte, nicht näher dargestellte Kupplungs-Brems-Kombination ermöglicht.

Während eines Zyklus der Blasformschließeinheit 10 führt die Hauptantriebswelle 84 eine Umdrehung um weniger als 360° aus. Die verbleibende Ergänzung des Drehwinkels auf 360° steht nur zum Abgriff verschiedener Steuerbewegungen bzw. -befehle von auf der Hauptantriebswelle angeordneten, später noch beschriebenen Steuernocken zur Verfügung.

Mit der Hauptantriebswelle 84 drehfest verbunden ist eine Scheibe 86 mit innenliegender Hubkurve 88. Auf der Hubkurve 88 läuft spielfrei eine Rolle 90, die durch eine Hebelübersetzung 92 den Vertikal-Hub der Blasformschließeinheit 10 bewirkt.

Ebenfalls drehfest ist mit der Hauptantriebswelle 84 eine Kurvenwalze 94 verbunden, der ein Mitnehmerstern 96 zugeordnet ist, der auf einer quer zur Hauptantriebswelle 84 verlaufenden Achse sitzt, an seinem Umfang in die Kurven der Kurvenwalze 94 eingreifende Mitnehmerrollen 98 trägt und mit einem Schwinghebel 100 verbunden ist, der als einarmiger Hebel ausgebildet und an seinem freien Ende mit dem Blasdornschlitten 16 verdunden ist, wobei die Länge des Hebels ein Vielfaches des Radius der Umlaufbahn der Mitnehmerrollen 98 beträgt. Durch die Kurven der Kurvenwalze 94 erfährt der Schwinghebel 100 eine hin und und her gehende Bewegung, die den Vor- und Rücklauf des Blasdornschlittens 16 während eines Zyklus bewirkt.

Während die Achse des Mitnehmersterns 96 horizontal verläuft, ist die Achse eines weiteren Mitnehmersterns 102 vertikal angeordnet und stellt die Drehachse des Drehtellers 12 dar. Diesem Mitnehmerstern 102 ist ebenfalls eine drehfest mit der Hauptantriebswelle 84 verbundene Kurvenwalze 104 zugeordnet, die derart ausgebildet ist, daß während jedes Zyklus der Drehteller 12 um einen Taktschritt weiterbewegt wird.

Vorzugsweise läuft der Kurventrieb im Ölbad.

Auf der Hauptantriebswelle 84 sind eine Anzahl von Steuernocken bzw. Kurbenscheiben 106 angeordnet, die zur direkten Betätigung oder zur elektrischen Auslösung weiterer Vorgänge in Abhängigkeit von dem durch die Hauptantriebswelle 84 gesteuerten Zyklus dienen. Diese Nocken bzw. Kurvenscheiben können auch auf einer mit der Hauptantriebswelle 84 gekuppelten Hilfswelle angeordnet sein.

Elektrisch betätigt wird beispielsweise die Abschaltung und Bremsung des Getriebemotors 82, die Steuerung des Hydraulikzylinders 70 für die Blasdornbewegung in vertikaler Richtung, der Beginn des Blasvorgangs und der Beginn des Schnellentlüftens.

Über eine Schaltkurve wird die nachfolgend noch erläuterte Verschiebung einer Segmentplatte in der Übernahmeposition des Drehtellers bewirkt, um das Schließen der Formmaske 14 auszulösen.

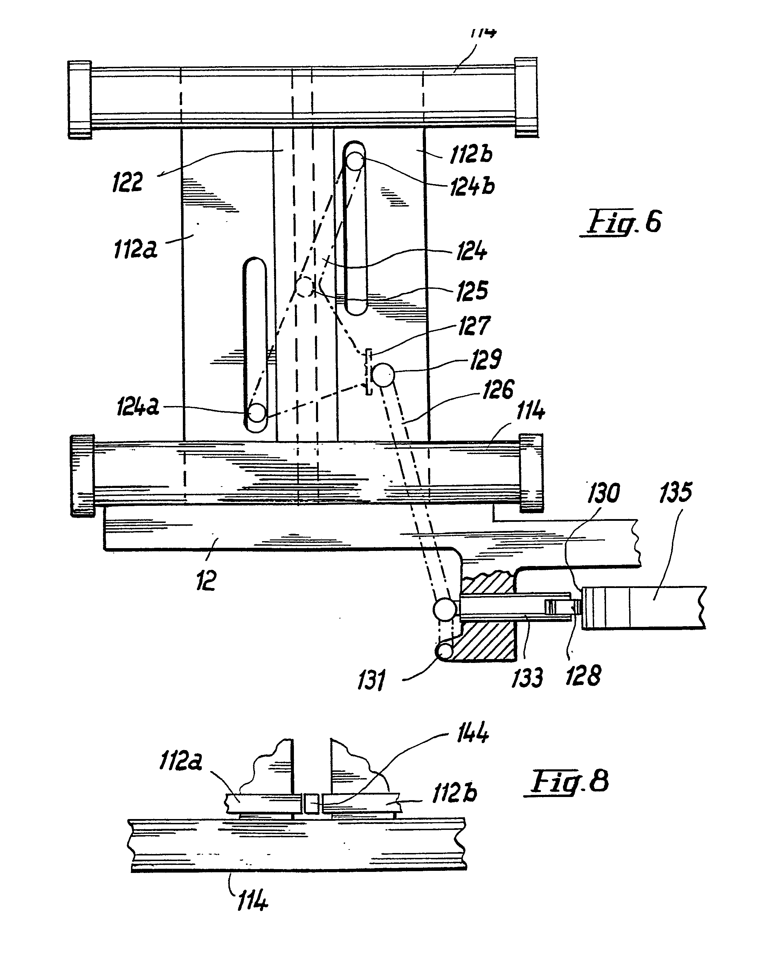

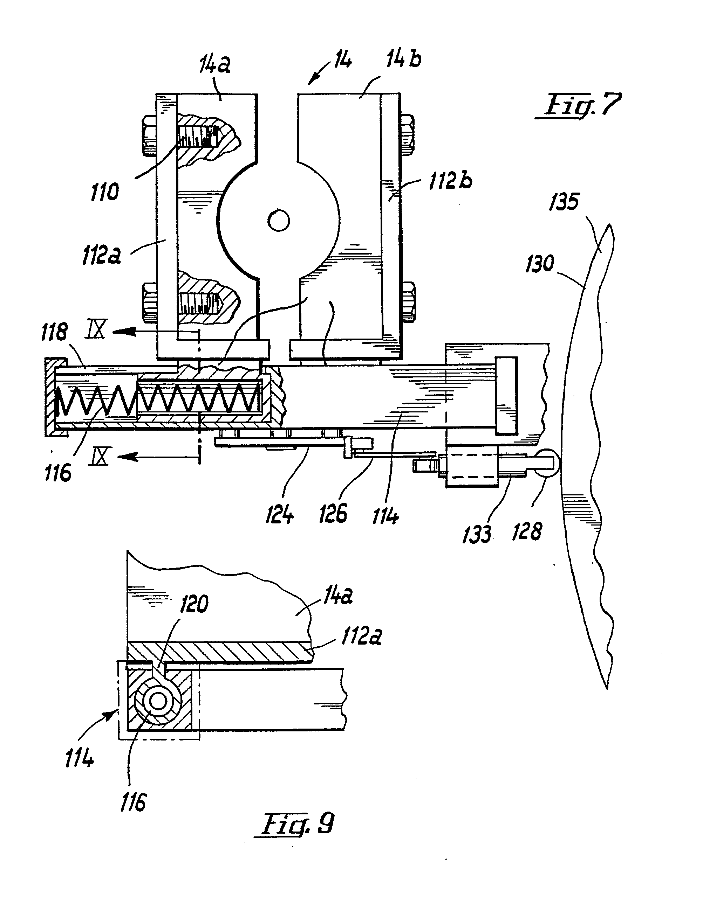

Die Formmasken 14 sind, wie deutlich aus Fig. 7 zu entnehmen ist, als schnell auswechselbare Elemente ausgebildet, wobei die beiden Hälften 14a und 14b der Masken über Positionierungsstifte 110 an Maskenträgern 112a bzw. 112b befestigbar sind. Die Maskenträger 112a und 112b werden in ähnlicher Weise wie die Formträger 26a und 26b nur einseitig über mindestens zwei horizontale Führungen 114 geführt (Fig. 6). Die beiden Maskenträger 112a und 112b werden unter Vorspannung geschlossen gehalten, wozu beispielsweise die obere Führung (Fig. 6) teleskopartig ausgebildet und im Inneren der Führung mit Druckfedern 116 versehen ist. In die Führungshülsen 118 greifen durch Schlitze mit den Maskenträgern 112a bzw. 112b verbundene Arme 120. Zwischen die Arme 120 und die Enden der Führungshülsen 118 sind Druckfedern 116 derart eingespannt, daß sie bestrebt sind, die Maskenträger 112a und 112b einander anzunähern.

In der Maskenteilungsebene ist in halber Höhe der Maskenträger 112a und 112b an einem die Führungshülsen 118 tragenden, mit dem Drehteller 12 verbundenen Stützarm 122 eine zweiarmige Schwinge 124 gelagert, deren in Bezug auf den Drehpunkt 125 der Schwinge 124 einander diametral gegenüberliegende Enden 124a und 124b in schlitzförmige Kulissenführungen 132a bzw. 132b an jedem Maskenträger 112a bzw. 112b derart eingreifen, daß durch eine Schwenkbewegung der Schwinge 124 in Fig. 6 im Uhrzeigersinn die Maskenträger 112a und 112b entgegen der Wirkung der Druckfedern 116 aus ihrer geschlossenen in ihre geöffnete Stellung bewegt werden.

Um diese Schwenkbewegung der Schwinge 124 zu veranlassen, wirkt mit einer an der Schwinge 124 angeordneten Druckplatte 127 das freie Ende 129 eines Hebels 126 zusammen, der um eine horizontale Achse 131 etwa in einer vertikalen Radialebene des Drehtellers 12 verschwenkbar am Drehteller 12 gelagert ist. Auf der dem freien Ende 129 des Hebels 126 zugewandten Seite der Achse 131 greift am Hebel 126 ein am Drehteller in etwa radialer Richtung horizontal verschieblich gelagerter Stößel 133 an, der an seinem dem Zentrum des Drehtellers 12 zugewandten Ende eine um eine vertikale Achse drehbar gelagerte Rolle 128 trägt. Die Rolle 128 liegt unter der über die Schwinge 124, den Hebel 126 und den Stößel 133 übertragenen Wirkung der Druckfedern 116 an einer vertikalen Lauffläche 130 am Umfang einer ortsfest gelagerten, im wesentlichen kreisförmigen Führungsschiene 135 an. Der Radius der Lauffläche 130 vergrößert sich kurz vor der Station e in welcher die Flaschen abgegeben werden, über eine Übergangskurve 136, so daß die Lauffläche 130 einen Abschnitt 134 mit geringerem und einen Abschnitt 138 mit größerem Radius aufweist. Beide Abschnitte 134 und 138 verlaufen längs einer Kreislinie.

Beim Auflaufen der Rolle 128 auf den Abschnitt 138 mit größerem Radius wird der Stößel 133 in Bezug auf den Drehteller 12 radial nach außen verschoben, verschwenkt dadurch den Hebel 126 und dieser verschwenkt seinerseits die Schwinge 124 in Fig. 6 im Uhrzeigersinn, wodurch die Maskenträger 112a und 112b entgegen der Wirkung der Druckfedern 116 auseinanderbewegt werden, so daß der von der Formmaske 14 getragene Hohlkörper freigegeben wird.

Von der Station e bis zur Station a, in welcher die geblasenen Hohlkörper vom Blasdorn 66 übernommen werden, muß die Formmaske 14 geöffnet bleiben. Damit die Formmaske 14 in der Station a zunächst geöffnet bleibt, dann aber ohne Drehbewegung des Drehtellers 12 in die geschlossene Stellung überführt werden kann, um den Hohlkörper zu erfassen und die Entfernung des Blasdorns 66 aus dem Hohlkörper zu ermöglichen, wird derjenige Bereich des Abschnitts 138, auf welchem die Rolle 128 in der Station a aufliegt, durch einen plattenförmigen Schieber 140 gebildet, der in einem Schlitz 141 der Führungsschiene 135 radial und horizontal beweglich angeordnet ist. Der Schieber 140 wird durch eine Druckfeder 139 radial nach außen gegen einen Anschlag 142 an der Führungsschiene 135 gedrückt, wobei in dieser Stellung der Abschnitt 138 in die Außenfläche des Schiebers 140 übergeht. In dieser Position wird der Schieber 140 durch eine nicht gezeigte, federbelastete Sperrklinke festgehalten, deren Auslösung in Abhängigkeit von einem der erwähnten, auf der Hauptantriebswelle 84 sitzenden Kurvenscheiben 106 erfolgt.

Die Auslösung der Sperrklinke erfolgt, sobald der Blasdorn 66 einen Hohlkörper in die Übergabeposition innerhalb der geöffneten Formmaske 14 bewegt hat. Unter der Wirkung der Druckfedern 116, deren auf den Stößel 133 einwirkende Kraft größer ist als die Kraft der den Schieber 140 stützenden Druckfeder 139, wird der Schieber 140 radial einwärts bewegt und die Formmaske 14 in der Station a wird geschlossen. Anschließend setzt sich der Drehteller 12 in Bewegung und die Rolle 128 der aus der Station a auswandernden Formmaske 14 läuft auf den Abschnitt 134 der Führungskurve 135. Der nun wieder entlastete Schieber 140 wird unter der Wirkung der Druckfeder 139 wieder gegen den Anschlag 142 geschoben und in dieser Position durch die erwähnte Sperrklinke festgehalten.

Bei Flaschen, welche durch einen Stanzvorgang entgratet werden müssen, werden die Formmasken 14 als Matrizen ausgebildet, deren Formgebung so gewählt ist, daß in der Entgratstation ein direktes Durchfahren des Entgratstempels durch die Formmaske möglich ist. Dadurch wird für ein Abstanzen des Abfalls auch nur die Zeit für das Vor- und Zurückbewegen des Stanzmessers oder des Entgratstempels benötigt.

In der gleichen Station kann nach dem Entgraten noch während der Stillstandsphase die Dichtheitsprüfung erfolgen, dergestalt, daß der ortsfest über der Flasche angeordnete, in seiner Höhe verstellbare Prüfstempel vertikal abwärts bewegt wird und sich auf den Flaschenhals aufsetzt, diesen dabei abstützt und durch den heruntergehenden Prüfstempel die Formmaske gering geöffnet wird, wozu ein Keil 144 benutzt werden kann, der zwischen die Arme 120 eingeschoben wird (Fig. 8).

Diese Bewegungen erfolgen mechanisch durch einen vertikal geführten, parallel zum Prüfstempel angeordneten Hebel, der mit dem Prüfstempel in Verbindung steht, wobei zugleich ein Abstützorgan unter den Boden der zu prüfenden Flasche bewegt werden kann.

Zur Verbesserung der Haftung des Flaschenhalses am Schaft des Blasdorns 66 kann der Blasdornschaft mit einer erhabenen Wulst versehen werden, so daß während des Transportes der teilweise noch plastischen Flasche aus der Blasform 24 zur Formmaske 14 außer der kraftschlüssigen Verbindung zwischen Blasdornschaft und Flaschenhals auch eine formschlüssige Verbindung besteht. Da die Formmaske 14 um die Flasche geschlossen wird, bevor der Blasdorn 66 aus dem Flaschenhals herausbewegt wird, wird das Lösen des Blasdorns 66 aus dem Flaschenhals nicht behindert.

Bei Flaschen mit Überquetschung am Flaschenhals kann der Blasdorn 66 auch mit einem zur Blasdornachse parallelen, profilierten Stift versehen werden, der insbesondere bei asymmetrischen Flaschen mit außerhalb der Blasdornachse liegendem Schwerpunkt eine zusätzliche Halterung bewirkt.

Wie bereits oben erwähnt wurde, führt die Hauptantriebswelle 84 während eines Zyklus der Blasformschließeinheit 10 eine Umdrehung um 360° aus. Anschließend wird die Hauptantriebswelle 84 durch eine Kupplungs-Brems-Kombination stillgesetzt, wobei die Stillstandszeit bis zu einer erneuten Umdrehung der Hauptantriebswelle 84 um 360° durch ein einstellbares Zeitglied bestimmt wird, dessen Einstellung je nach Material, Form une Wandstärke des zu erzeugenden Hohlkörpers vorgenommen wird.

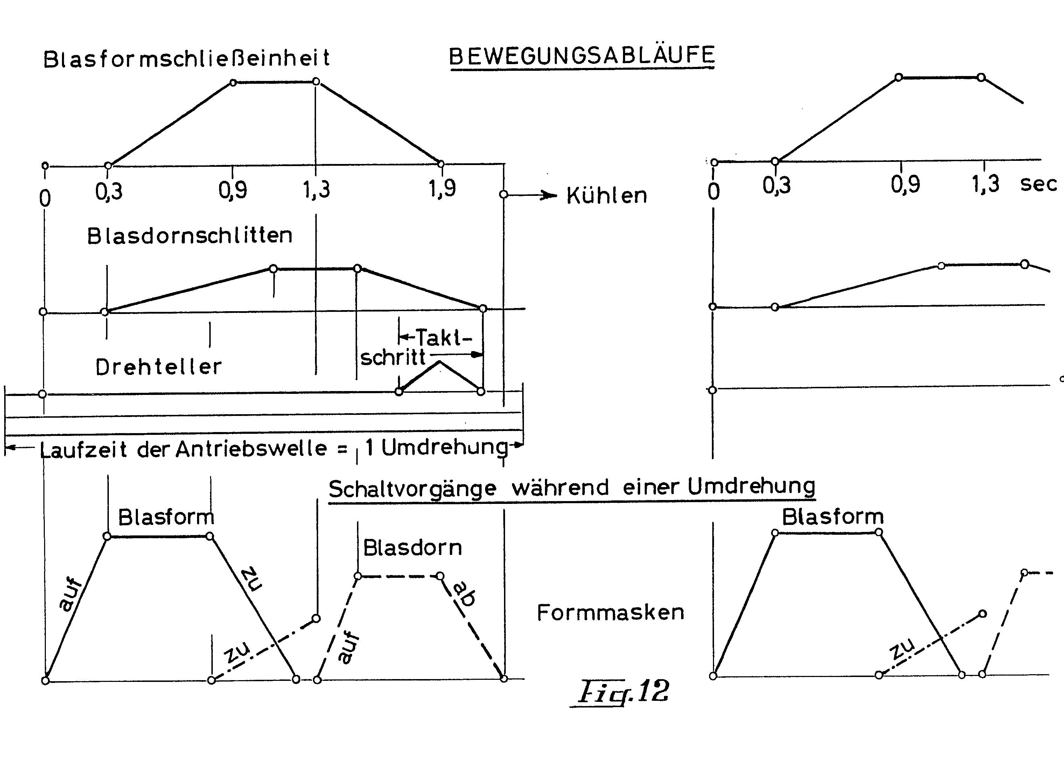

Die einer einzigen Umdrehung entsprechende Laufzeit der Antriebswelle ist in Fig. 12 dargestellt. Bezogen auf diese Laufzeit der Hauptantriebswelle 84 sind die vom Kurventrieb abhängigen Bewegungen der Blasformschließeinheit 10, des Blasformschlittens 16 und des Drehtellers 12 über der Laufzeit der Hauptantriebswelle 84 und die durch Antriebszylinder bewirkte Öffnungs- und Schließbewegung der Blasform 24 und die Vertikalbewegung des Blasdorns 66 unter der Laufzeit der Hauptantriebswelle 84 dargestellt. Der Zyklus der dargestellten Bewegungen beginnt bei der Zeit 0, welche jedoch einen gewissen zeitlichen Abstand vom Beginn der Drehbewegung der Hauptantriebswelle 84 aufweist, d. h. die als erste Bewegung dargestellte Öffnungsbewegung der Blasform 24 beginnt erst, nachdem die Hauptantriebswelle bereits einen gewissen Drehwinkel durchlaufen hat. Dadurch wird es möglich, daß einige der auf der Hauptantriebswelle 84 angeordneten Kurvenscheiben 106 Schaltvorgänge auslösen, wie beispielsweise die Schnellentlüftung des Hohlkörpers über den Blasdorn 66. In gleicher Weise ist aus Fig. 12 ersichtlich, daß der Bewegungszyklus mit dem Senken des Blasdorns 66 bzw. dessen Einfahren in die Blasstellung endet, daß aber die Hauptantriebswelle 84 zu diesem Zeitpunkt ihre Drehbewegung um 360° noch nicht ganz vollendet hat, so daß auch nach der Beendigung des Bewegungszyklus über die auf der Hauptantriebswelle 84 angeordneten Kurvenscheiben noch Vorgänge gesteuert werden können, wie beispielsweise das Entgraten und die Dichtheitsprüfung des in der Station d befindlichen Hohlkörpers.

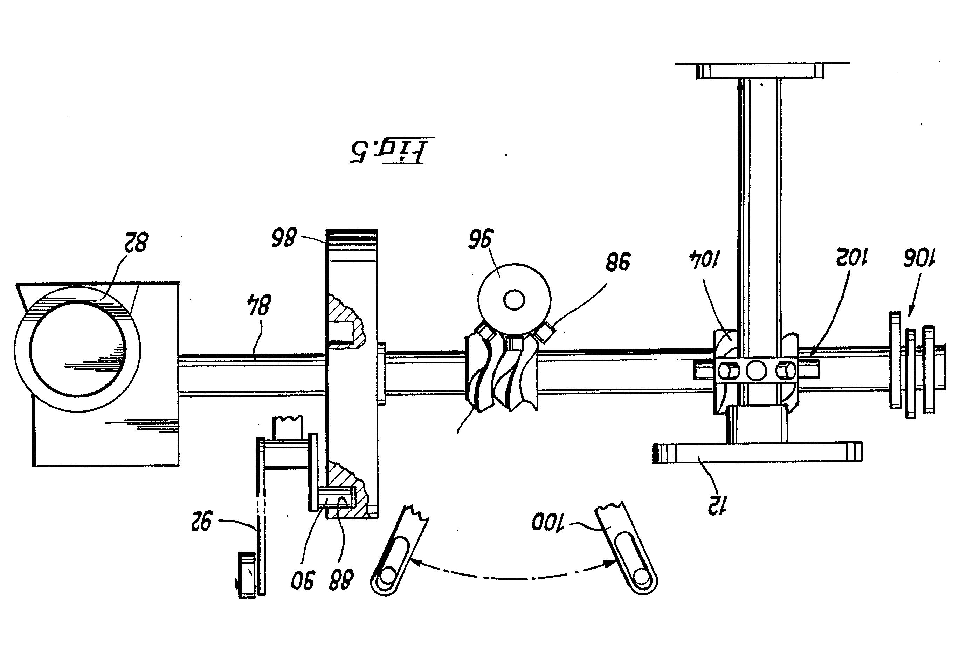

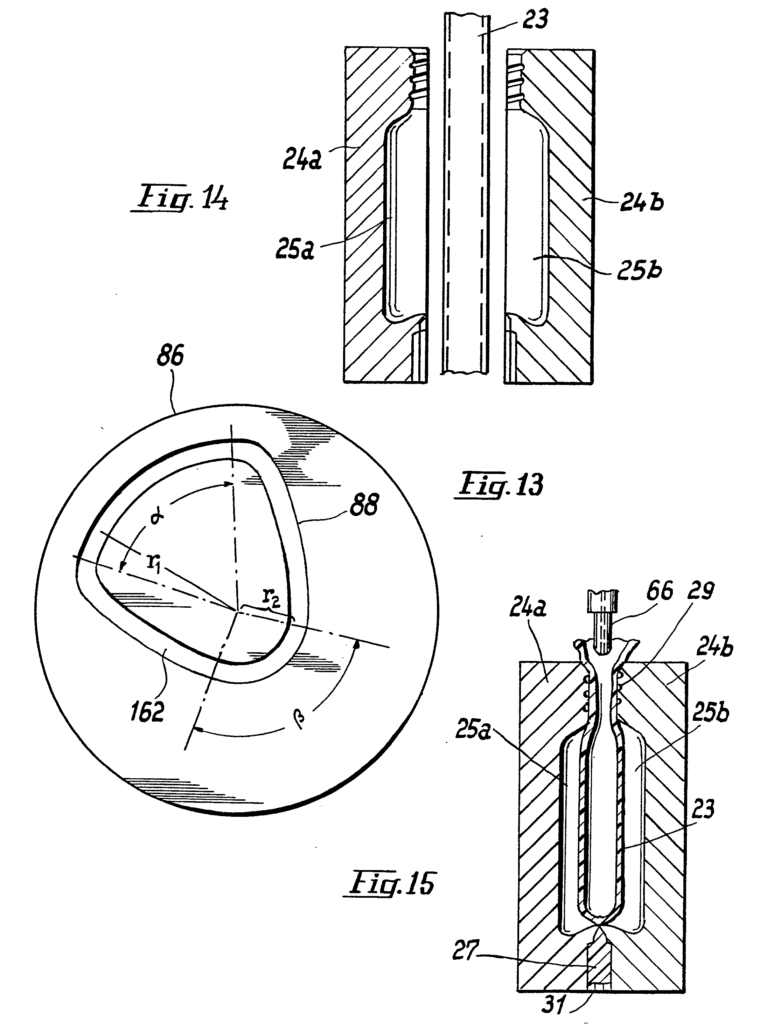

Die Fig. 13 zeigt lediglich beispielsweise anhand der Scheibe 86 mit innenliegender Hubkurve 88 für die Steuerung der Vertikalbewegung der Blasformschließeinheit 10, in welcher Weise eine derartige Kurve ausgebildet sein kann, um neben der Heb- und Senkbewegung noch jeweils ausreichende Stillstandszeiten vorzusehen. Die beispielsweise in Fig. 13 gezeigte Hubkurve besitzt einen konzentrischen, kreisförmigen Abschnitt über den Winkelbereich α, mit großem Radius, welcher, wie aus Fig. 5 deutlicher ersichtlich ist, der angehobenen Position der Blasformschließeinheit entspricht. Außerdem besitzt die Hubkurve einen ebenfalls konzentrischen Sektor β mit wesentlich geringerem Radius, dessen Lage nach einer Drehung um 180° gegenüber der aus Fig. 13 ersichtlichen Lage in Fig. 5 in unterbrochenen Linien dargestellt ist.

Dieser Sektor β entspricht der abgesenkten Position der Blasformschießeinheit 10. Zwischen beiden Positionen erstreckt sich ein Kurvenabschnitt 162, der entsprechend den gewünschten Beschleunigungs- und Verzögerungswerten gestaltet ist und der die Senkbewegung der Blasformschließeinheit 10 steuert. Theoretisch ist es möglich, in den Kurvenabschnitt 162 ein weiteres, konzentrisches Stück einzubeziehen, falls zwischen den beiden Endstellungen eine weitere Stillstandsphase des durch die Kurve gesteuerten Bewegungsablaufs erwünscht ist. Die Sektoren α und β ermöglichen den Vor- bzw. Nachlauf der Hauptantriebswelle 84 gegenüber der Vertikalbewegung der Blasform-Schließeinheit.

Die beschriebene Maschine kann durch gewisse Abwandlungen auch als Streck-Blasmaschine verwendet werden.

Das Streck-Blasen von Kunststoff-Flaschen setzt sich bekanntlich aus zwei Verformungsstufen zusammen, wobei in der ersten Stufe die Flasche auf eine sowohl im Durchmesser als auch in der Länge verkleinerte Größe vorgeblasen wird, wobei der Flaschenhals bereits die endgülte Form-Größe enthält. Die vorgeblasene Flasche wird in eine zweite Blasstation übergeben, welche eine Blasform der endgültig gewünschten Flaschengröße besitzt, wobei in der zweiten Stufe über einen zweiten Blasdorn mit einem zentral durch den Blasdorn vertikal geführten Reckstempel die Flasche endgültig ausgeformt wird, und zwar unter Streckung in Längs- und Querrichtung.

Dieses Ausblasen zur endgültigen Form muß im sogenannten thermoelastischen Bereich (ca. 70 bis 90 °C) erfolgen.

Mit der erfindungsgemäßen Maschine kann dieses Verfahren wie folgt durchgeführt werden :

1. Vorblasen der Flasche in der vertikal auf und ab bewegten Blasform-Schließeinheit 10 mit geregelter Formentemperatur, wobei das Entgraten des Bodenbutzens in der Blasform 24 oder während der Überführung in die Formmaske 14 auf dem Drehteller 12 durch einen Abschlagpropeller erfolgen kann.

2. Transport des Vorblas-Formlings von der Blasform 24 zum Drehteller 12, gegebenenfalls mit Abschlagen des Bodenbutzens der Flasche durch einen Abschlagpropeller.

3. Übernahme des Vorblas-Formlings in eine der zweiteiligen Fertig-Blasformen, die bei dieser Maschinenausführung anstelle der bei der zunächst beschriebenen Konstruktion vorgesehenen zweiteiligen Formmasken 14 derart montiert sind, daß jeder zweiteiligen Fertig-Blasform ein geführter Blasformschlitten zugeordnet ist, der radial nach außen in die Blasposition über der geschlossenen Fertig-Blasform bewegbar ist. Die Betätigung des Blasdornschlittens für die in Bezug auf den Drehteller 12 radiale Vor- und Zurückbewegung erfolgt über eine im Bereich der vertikalen Achse der Drehtellers 12 angeordnete, einstellbare und feststehende Kurvenscheibe, mit der ein Übertragungshebel zusammenwirkt.

Die Schaltung des Ventils für den Antriebszylinder zum Heben und Senken des Blasdorns und für Beginn und Ende des Blasvorgangs, sowie für das Schnellentlüften erfolgt über Kurvenscheiben, die ebenfalls im Bereich der vertikalen Achse des Drehtellers ortsfest angeordnet sind.

**Ansprüche**

1. Maschine zur Herstellung geblasener Kunststoffhohlkörper mit einem Maschinenbett (20), mit einer Abgabevorrichtung für einen Vorformling, insbesondere zur Abgabe über einen Extruderkopf (22), mit einer Blasformschließeinheit (10) zur Aufnahme der Formhälften einer in einer vertikalen Ebene geteilten Blasform (24) an je einem Blasformträger (26a, 26b), wobei die Blasformschließeinheit (10) zwischen einer oberen, unterhalb der Abgabevorrichtung befindlichen Vorformling-Übergabeposition und einer unteren, gegenüber der Übergabeposition abgesenkten Blasposition bewegbar ist, mit mindestens einem für den Blasvorgang in die Blasöffnung der in der Blasposition befindlichen Blasform einführbaren Blasdorn (66) und mit einer Nachbehandlungsvorrichtung für den geblasenen Hohlkörper, dadurch gekennzeichnet, daß ein taktweise angetriebener Drehteller (12) mehrere gleichmäßig über den Umfang verteilte Aufnahmen (14) für die geblasenen Hohlkörper besitzt und durch einen Taktantrieb zwischen einer in der Teilebene (E) der Blasformschließeinheit (10) angeordneten Übernahmeposition und mehreren Folgestationen, darunter mindestens einer Nachbehandlungsstation, bewegbar ist, daß der Blasdorn (66) die geblasenen Hohlkörper von der Blasposition zur Übernahmeposition überbringt und von einem Blasdornschlitten (16) getragen wird, der horizontal in der Teilebene (E) der Blasformschließeinheit (10) zwischen der Blasposition und der Übernehmeposition beweglich und in der Blasposition im Maschinenbett (20) indexierbar ist, und daß die Blasformschließeinheit (10) horizontale Führungen (52, 54) für die Blasformträger (26a, 26b) nur an der vom Blasdornschlitten (16) abgewandten Seite besitzt.

2. Maschine nach Anspruch 1, dadurch gekennzeichnet, daß die Bewegung der Blasformschließeinheit (10), des Blasdornschlittens (16) und des Drehtellers (12) über einen geschlossenen, kombinierten Kurventrieb (84, 86, 92, 94, 96, 100, 102, 104) zwangläufig von einer gemeinsamen Antriebseinheit (82) abgeleitet ist.

3. Maschine nach Anspruch 1, dadurch gekennzeichnet, daß die Blasformschließeinheit (10) in senkrechter Richtung über eine hydropneumatische Gewichtsausgleichsvorrichtung (32) abgestützt ist.

4. Maschine nach Anspruch 1, dadurch gekennzeichnet, daß die auf dem Drehteller (12) angeordneten Aufnahmen zweiteilige, zwischen einer Öffnungs- und einer Schließstellung bewegbare Formmasken (14) sind, die in der Übernahmeposition (a) in der Teilebene (E) der Blasformschließeinheit (10) geteilt sind.

5. Maschine nach Anspruch 4, dadurch gekennzeichnet, daß die Formmasken (14) durch Federn (116) in ihre geschlossene Stellung vorgespannt und durch einen Stellmechanismus (124, 126, 132, 133) in ihre geöffnete Stellung bewegbar sind, wobei der Stellmechanismus mit einer ortsfesten, zum Drehteller (12) konzentrisch angeordneten Kurvenbahn (130) zusammenwirkt.

6. Maschine nach Anspruch 5, dadurch gekennzeichnet, daß die Hälften (14a, 14b) der Formmasken austauschbar und durch komplementäre Indexierungsorgane (110) justiert auf Maskenträgern (112a, 112b) angebracht sind.

7. Maschine nach Anspruch 6, dadurch gekennzeichnet, daß die Maskenträger (112a, 112b) auf ihrer in der Übernahmeposition (a) von der Blasform-Schließeinheit (10) abgewandten Seite auf am Drehteller (12) angebrachten Führungen (114) gelagert sind.

8. Maschine nach Anspruch 7, dadurch gekennzeichnet, daß die Führungen (114) als Führungshülsen (118) ausgebildet sind, die an ihrer den Maskenträgern (112a, 112b) zugewandten Seite geschlitzt sind, wobei jeder Maskenträger mit jeweils einem Arm durch den Schlitz in die Führungshülse (118) eingreift.

9. Maschine nach Anspruch 8, dadurch gekennzeichnet, daß zumindest die in eine Führungshülse (118) eingreifenden Arme (120) der beiden Maskenträger (112a, 112b) durch in den Führungshülsen angeordnete Druckfedern (116) in ihre Schließstellung vorgespannt sind.

10. Maschine nach Anspruch 5, dadurch gekennzeichnet, daß die Kurvenbahn (130) einen den Stellmechanismus (124, 126, 132, 133) in die Öffnungsstellung bewegenden Abschnitt (138) besitzt, der sich von einer Abgabestation (e) für die fertigen Hohlkörper bis unmittelbar vor die Übernahmeposition (a) erstreckt, wobei dieser Abschnitt (138) in der Übergabeposition durch einen beweglichen Kurvenabschnitt (140) ergänzbar ist, der durch eine Sperre in dieser den Abschnitt 138 ergänzenden Position feststellbar und nach Lösen der Sperre unter der Wirkung der die Maskenträger (112a, 112b) in ihre geschlossene Stellung spannenden Federn (116) aus seiner den Abschnitt (138) ergänzenden Lage entgegen der Wirkung eines Rückstellorgans (139) bewegbar ist.

11. Maschine nach Anspruch 1, dadurch gekennzeichnet, daß die Blasform-Schließeinheit (10) zwei horizontal gegeneinander bewegliche Formträger (26a und 26b) aufweist, daß in einer Führungskonsole (28) mit vertikalem Abstand zwei zueinander parallele, horizontal verlaufende Führungsholme (52, 54) verschieblich gelagert sind, die mit dem einen Formträger (26a) fest verbunden sind und auf denen der andere Formträger (26b) verschieblich gelagert ist, und daß durch einen an der Führungskonsole (28) gelagerten Stellzylinder (64) eine in Bezug auf die Führungskonsole (28) gegenkäufige Bewegung der Führungsholme (52, 54) und des auf dem Führungsholmen gelagerten Formträgers (26b) bewirkbar ist.

12. Maschine nach Anspruch 11, dadurch kennzeichnet, daß der Stellzylinder (64) über eine Kniehebelkonstruktion (62a, 62b) auf die Führungsholme (52, 54) und den einen Formträger (26b) einwirkt.

13. Maschine nach Anspruch 2, dadurch gekennzeichnet, daß der kombinierte Kurventrieb eine gemeinsame Hauptantriebswelle (84) aufweist, mit der drehfest in sich geschlossene Kurvenelemente (86, 94, 104) zur synchronen Ableitung von Stellbewegungen verbunden sind.

14. Maschine nach Anspruch 13, dadurch gekennzeichnet, daß mit der Hauptantriebswelle (84) eine Scheibe (86) mit innenliegender Hubkurve (88) verbunden ist, in welche spielfrei eine Rolle (90) eingreift, die an einer mit ihrem anderen Ende mit der Blasform-Schließeinheit (10) verbundenen Hebelübersetzung (92) angebracht ist.

15. Maschine nach Anspruch 13, dadurch gekennzeichnet, daß mit der Hauptantriebswelle (84) eine Kurvenwalze (94) verbunden ist, in die spielfrei ein Mitnehmerstern (96) eingreift, wobei der Kurvenverlauf der Kurvenwalze (94) geeignet ist, eine hin- und hergehende Bewegung des Mitnehmersterns (96) zuerzeugen, mit welchem ein am Blasdornschlitten (16) angreifender Schwinghebel (100) verbunden ist.

16. Maschine nach Anspruch 13, dadurch gekennzeichnet, daß mit der Hauptantriebswelle (84) eine weitere Kurvenwalze (104) verbunden ist, in welche spielfrei ein um eine vertikale Achse drehbarer weiterer Mitnehmerstern (102) eingreift, wobei der Kurvenverlauf der Kurvenwalze (104) geeignet ist, den weiteren Mitnehmerstern (102) um gleichmäßige, sich zu 360° ergänzende Schritte zu bewegen, und daß der weitere Mitnehmerstern (102) mit dem Drehteller (12) in Antriebsverbindung steht.

17. Maschine nach Anspruch 16, dadurch gekennzeichnet, daß der weitere Mitnehmerstern (102) mit dem Drehteller (12) verbunden ist.

18. Maschine nach einem der Ansprüche 2 und 13-17, dadurch gekennzeichnet, daß die Hauptantriebswelle (84) über einen Schneckentrieb durch einen drehzahlregelbaren Gleichstrommotor mit Tyristorsteuerung antreibbar ist.

19. Maschine nach Anspruch 13, dadurch gekennzeichnet, daß der Antrieb der Hauptantriebswelle (84) jeweils nach einer Umdrehung der Hauptantriebswelle um 360° abschaltbar und in Abhängigkeit von einem einstellbaren Zeitglied wieder einschaltbar ist.

20. Maschine nach Anspruch 13, dadurch gekennzeichnet, daß die Elemente (86, 94, 104) des Kurventriebs derart ausgelegt sind, daß die von ihnen abgeleiteten Bewegungen erst einsetzen, nachdem die Hauptantriebswelle (84) einen Vorlaufwinkel durchlaufen hat, und bereits beendet werden, bevor die Hauptantriebswelle (84) einen Nachlaufwinkel durchläuft.

21. Maschine nach Anspruch 3, dadurch gekennzeichnet, daß die Blasform-Schließeinheit (10) auf eine in einem Behälter (34) befindliche Ölfüllung (40) abgestützt ist, die ihrerseits von einem Gaspolster (48) beaufschlagt ist, wobei die die Schließeinheit abstützende Fläche der Ölfüllung wesentlich kleiner ist, als die vom Gaspolster beaufschlagte Fläche.

22. Maschine nach Anspruch 21, dadurch gekennzeichnet, daß die Blasform-Schließeinheit (10) über einen in einem Zylinder beweglichen Kolben (36) auf die Ölfüllung (40) abgestützt ist, daß die Ölfüllung über eine Verbindungsleitung (42) mit einem Druckspeicher (44) verbunden ist, in dem das Öl durch einem schwimmend angeordneten zweiten Kolben (46) mit wesentlich größerer Kolbenfläche von einem Gaspolster (48) getrennt ist.

23. Maschine nach einem der Ansprüche 21 oder 22, dadurch gekennzeichnet, daß das Gaspolster (48) aus einem Druckgasvorrat (50) ergänzbar ist.

24. Maschine nach Anspruch 4, dadurch gekennzeichnet, daß die Formmasken (14) für durch einen Stanzvorgang zu entgratende Hohlkörper als Matrizen ausgebildet sind, die von einem Entgratstempel durchquerbar sind.

25. Maschine nach Anspruch 5, dadurch gekennzeichnet, daß in einer Nachbehandlungsstation (d) ein auf den Hohlkörper innerhalb der Formmasken (14) aufsetzbarer Prüfstempel zur Dichtheitsprüfung angeordnet ist, mit dem ein Spreizkeil (144) verbunden ist, der geeignet ist, zwischen die Hälften (14a, 14b) der Formmasken einzudringen und diese während des Prüfvorgangs entgegen der Wirkung der Federn (116) etwas auseinanderzudrücken.

26. Maschine nach Anspruch 25, dadurch gekennzeichnet, daß in Abhängigkeit von der Bewegung des Prüfstempels ein Stützorgan unter den Boden des zu prüfenden Hohlkörpers bewegbar ist.

27. Maschine nach Anspruch 1, dadurch gekennzeichnet, daß der Blasöffnung (29) gegenüberliegend eine zweite Öffnung (31) in der Blasform (24) ausgebildet ist, und daß an einem Träger (16) ein in die zweite Öffnung (31) einführbares Halteelement (33) angeordnet ist.

28. Blasvorrichtung nach Anspruch 27, dadurch gekennzeichnet, daß das Halteelement (33) dornförmig ausgebildet ist.

29. Blasvorrichtung nach Anspruch 28, dadurch gekennzeichnet, daß der Dorn um eine zu seiner Bewegungsrichtung in die bzw. aus der zweiten Öffnung (31) parallele Achse drehbar ist.

30. Blasvorrichtung nach Anspruch 28, dadurch gekennzeichnet, daß der Dorn (33) runden Querschnitt besitzt.

31. Blasvorrichtung nach Anspruch 28, dadurch gekennzeichnet, daß der Dorn (33) sich in Richtung auf die zweite Öffnung (31) konisch verjüngt.

32. Blasvorrichtung nach einem der Ansprüche 27-31, dadurch gekennzeichnet, daß der Träger (16a, 16b) des Halteelements (33) und ein Träger (16) des Blasdorns (66) gemeinsam relativ zur Blasdorm (24) bewegbar sind.

33. Blasvorrichtung nach Anspruch 32, dadurch gekennzeichnet, daß der Träger (16) des Blasdorns und der Träger (16a, 16b) des Halteelements gemeinsam in der Formteilebene bewegbar sind.

34. Blasvorrichtung nach Anspruch 27, dadurch gekennzeichnet, daß eine Betätigungsvorrichtung (77, 83) für das Halteelement (33) und eine Betätigungsvorrichtung (70, 72) für den Blasdorn (66) zu gemeinsamer gegenläufigen Bewegung von Blasdorn (66) und Halteelement (33) miteinander verbunden sind.

35. Maschine nach einem der Ansprüche 1-3, dadurch gekennzeichnet, daß die auf dem Drehteller (12) angeordneten Aufnahmen zweiteilige Fertig-Blasformen sind, deren jeder ein geführter Blasdornschlitten zugeordnet ist.

36. Maschine nach Anspruch 35, dadurch gekennzeichnet, daß der Blasformschlitten für die Fertig-Blasform auf dem Drehteller (12) radial beweglich angeordnet und durch einen Übertragungshebel im Abgriff von einer Kurvenscheibe antreibbar ist.

37. Maschine nach Anspruch 36, dadurch gekennzeichnet, daß das Heben und Senken des Blasdorns für die Fertig-Blasform, der Beginn und das Ende des Blasvorgangs und das Schnellentlüften über Kurvenschieben auf der Drehtellerachse gesteuert werden.

## Claims

1. A machine for producing blown hollow synthetic resin workpieces with a machine bed (20), with a parison delivery unit, and more specially such a unit for delivery from an extruder head, with a blow mold shutting unit (10) for taking up mold halves of a blow mold with an upright parting plane on each blow mold support (26a, 26b), said blow mold shutting unit (10) being able to be moved between a top parison handing over position under the delivery unit, and a lower blowing position which is at a lower level than the handing over position, whith at least one blow stick (66) which may be moved for the blow operation into the blow opening of the blow mold in the blow position, and with an after-processing unit for the blown hollow workpieces, characterized in that a turntable (12), designed to be moved in steps, has a number of rests (14), spaced round its edge, for the blown hollow workpieces and may be moved by a stepping driving system between a take-over position placed in the parting plane (E) of the blow mold shutting unit (10), and a number of further stations, at least one of said further stations being an after-processing station, in that the blow stick (66) transports the blown workpieces from the blowing position to the take-over position and is supported by a blow stick carriage (16) which is movable horizontally in the parting plane (E) of the blow mold shutting unit (10) between the blowing position and the take-over position and is indexable in the blowing position in the machine bed (20), and in that the blow mold shutting unit has horizontal guides (52, 54) for the blow mold supports (26a, 26b) only on the side furthest from the blow stick carriage (16).

2. A machine as claimed in claim 1, characterized in that the motion of the blow mold shutting unit (10), of the blow stick carriage (16) an of the turntable (12) is caused by a turning combined cam system (84, 86, 92, 96, 100, 102, 104) positively connected to a common driving unit (82).

3. A machine as claimed in claim 1, characterized in that the blow mold shutting unit (10) is supported in an upright direction by way of a hydropneumatic weight balancing system (32).

4. A machine as claimed in claim 1, characterized in that the rests placed on the turntable (12) are two-part mold masks (14) able to be moved between an open and as hut position and which in the take-over position (a) are parted in a parting plane (E) of the blow mold shutting unit (10).

5. A machine as claimed in claim 4, characterized in that the mold masks (14) are acted on by springs (116) for keeping them in their shut positions and are able to be moved by a driving system (124, 126, 132, 133) into their opened positions, the driving system working with a fixed-position cam race (130) having a common center with the turntable (12).

6. A machine as claimed in claim 5, characterized in that the halves (14a, 14b) of the mold masks are able to be exchanged for other such mold masks and are kept in their true positions by indexing parts (110) on mask supports (112a, 112b).

7. A machine as claimed in claim 6, characterized in that the mask supports (112a, 112b) are supported on their side (which in the take-over position (a) is furthest from the blow mold shutting unit (10) on guides (114) on the turntable (12).

8. A machine as claimed in claim 7, characterized in that the guides (114) are designed as guide sleeves (118), which on their side facing the mask supports (112a, 112b) are slotted, and each mask support has an arm stretching through the slot into the guide sleeve (118).

9. A machine as claimed in claim 8, characterized in that at least the arms (120) running into one guide sleeve (118), of the two mask supports (112a, 112b) are acted upon by compression springs (116) (placed in the guide sleeves) for forcing them into their shut position.

10. A machine as claimed in claim 5, characterized in that the cam race (130) has a part (138) for moving the driving system (124, 126, 132, 133) into its opened position, this cam-part (138) stretching from a delivery station (e) for the completed hollow workpieces as far as a point right before the take-over position (a), and this cam-part (138) may be added to by a moving cam part (140), such part (140) being able to be locked by a lock in the position adding to part (138) and after undoing the lock is able to be moved under the effect of the springs (116) (acting on the mask supports (112a, 112b) for moving them into shut position) out of its position in which it is an addition to the cam part (138), against the effect of a return part (139).

11. Machine as claimed in claim 1, characterized in that the blow mold shutting unit (10) has two mold supports (26a, 26b) which are horizontally opposite to each other, in that in a guide (28) two parallel, vertically spaced and horizontal guide beams (52, 54) are movingly supported, which are fixedly joined to one mold support (26a) and on them the other mold support (26b) is movingly supported, and in that by way of a driving cylinder (64) supported on the guide (28) motion in opposite directions of the guide beams (52, 54) in relation to the guide (28) and of the mold support (26b) supported on the guide beams may be produced.

12. A machine as claimed in claim 11, characterized in that the driving cylinder (64) takes effect by way of a toggle lever system (62a, 62b) on the guide beams (52, 54) and the one mold support (26b).

13. A machine as claimed in claim 2, characterized in that the combined cam system has a common main driving shaft (84) on which turning cam parts (86, 94, 104) are keyed for producing timed motion of parts of the machine.

14. A machine as claimed in claim 13, characterized in that a cam (86) with a double-acting cam race (88) is keyed on the main driving shaft (84), a roller follower (90) running free of play in the race and being fixed on one end of a lever system (92) whose other end is joined up with the blow mold shutting unit (10).

15. A machine as claimed in claim 13, characterized in that a cam wheel (94) with a circumferential cam race is keyed on the main driving shaft (84), a follower wheel (96) having at least one follower running in said race free of play, the form of the circumferential race on cam wheel (94) being designed for producing a backward and forward motion of the follower wheel (96), the last-named being joined up with a lever (100) on the blow stick carriage (16).

16. A machine as claimed in claim 13, characterized in that a further cam wheel (104) is keyed on the main driving shaft (84), a circumferential cam race in said wheel having the follower of a follower wheel (102) (turning about a vertical axis) running in it without any play, the circumferential cam race of the cam wheel (104) being designed for moving the follower wheel (102) through even steps, making up 360° in all, and in that the follower wheel (102) is drivingly joined up with the turntable (12).

17. A machine as claimed in claim 16, characterized in that the follower wheel (102) is joined up with the turntable (12).

18. A machine as claimed in anyone of claims 2 and 13 to 17, characterized in that the main driving shaft (84) is powered by way of a DC motor, whose speed may be changed with a thyristor control circuit, acting through worm gearing.

19. A machine as claimed in claim 13, characterized in that the driving system for the main driving shaft (84) is designed to be turned off after each one turn of the main driving shaft through 360° and may be switched on again under the control of an adjustable timer.

20. A machine as claimed in claim 13, characterized in that the parts (86, 94, 104) of the cam system are so designed that the motion caused by them is only started after the main driving shaft (84) has run through a certain angle, and such motion comes to an end, before the main driving shaft (84) is moved through a follow-up angle.

21. A machine as claimed in claim 3, characterized in that the blow mold shutting unit (10) is supported by way of a mass of oil (40) in vessel (34), the oil for its part being supported by a gas cushion (48), the cross-section or area, supporting the shutting unit, of the oil, being very much smaller than the area acted upon by the gas cushion.

22. A machine as claimed in claim 21, characterized in that the blow mold shutting unit (10) is supported by way of a piston (36), placed in a cylinder, on the mass of oil (40), in that the oil (40) is joined up by way of a connection line (42) with a pressure accumulator (44), in which the oil is separated by a floating second piston (46) with a very much larger piston area form a gas cushion (48).

23. A machine as claimed in claim 21 or claim 22, characterized in that the gas cushion (48) may be topped up as necessary from a gas bottle (50).

24. A machine as claimed in claim 4, characterized in that the mold masks (14) are designed for a stamping operation (on the hollow workpieces to be deburred) as female molds, through which a deburring stamp may be moved crosswise.

25. A machine as claimed in claim 5, characterized in that in an after-processing station (d) there is a testing stamp, which may be placed on the hollow workpiece within the mold masks (14), for testing the workpieces to see if they are airtight, such testing stamp being joined up with a wedge (144) for opening the two halves (14a, 14b) of the mold masks to a small degree against the effect of springs (116) when testing is taking place.

26. A machine as claimed in claim 25, characterized in that, in a way dependent on the motion of the testing stamp, a support part may be moved under the lower end of the hollow workpiece to be tested.

27. A machine as claimed in claim 1, characterized in that opposite the blow opening (29) there is a second opening (31) in the blow mold (24) and in that on one support (16) there is a keeper element (33) able to be moved into the second opening (31).

28. A machine as claimed in claim 27, characterized in that the keeper element (33) is in the form of a pin.

29. A machine as claimed in claim 28, characterized in that the pin may be turned about an axis which is parallel to its direction of motion into and out of the second opening (31).

30. A machine as claimed in claim 28, characterized in that the pin (33) has a round cross-section.

31. A machine as claimed in claim 28, characterized in that the pin (33) becomes narrower conedly towards the second opening (31).

32. A machine as claimed in anyone of claims 27 to 31, characterized in that the support (16a, 16b) of the keeper element (33) and a support (16) of the blow stick (66) may be moved in common in relation to the blow mold (24).

33. A machine as claimed in claim 32, characterized in that the support (16) of the blow stick and of the supports (16a, 16b) of the keeper element may be moved in common in the mold parting plane.

34. A machine as claimed in claim 27, characterized in that a driving system (77, 83) for the keeper element (33) and a driving system (70, 72) for the blow stick (66) are joined together for causing motion of the blow stick (66) and the keeper element (33) in opposite directions at the same time.

35. A machine as claimed in anyone of claim 1 to 3, characterized in that the rests placed on the turntable (12) are two-part blow molds for completing the blowing operation, of which each has its own guided blow stick carriage.

36. A machine as claimed in claim 35, characterized in that the blow stick carriage for the second stage blow mold is placed on the turntable (12) so that it may be moved radially and may be moved by a connection lever acted upon by a cam.

37. A machine as claimed in claim 36, characterized in that the lifting and lowering of the blow stick for the second stage blow mold, the start and the end of the blowing operation and the high speed let-off of air are controlled by cams centered on the axis of the turntable.

**Revendications**

1. Machine pour la fabrication de corps creux soufflés en matière plastique, du type comportant un banc de machine (2), un dispositif de fourniture d'une ébauche, en particulier de fourniture par l'intermédiaire d'une tête d'extrusion (22), une unité de fermeture du moule (10) pour recevoir les moitiés de moule d'un moule de soufflage (24) subdivisé dans un plan vertical par respectivement un support de moule de soufflage (26a, 26b), l'unité de fermeture du moule de soufflage (10) étant susceptible d'être déplacée entre une position supérieure de transfert de l'ébauche, située en dessous du dispositif de fourniture, et une position inférieure de soufflage, surbaissée par rapport à la position de transfert, au moins un poinçon de soufflage (66) susceptible d'être introduit, pour l'opération de soufflage, dans l'ouverture de soufflage du moule de soufflage qui se situe dans la position de soufflage, et un dispositif de post-traitement pour le corps creux soufflé, caractérisée par le fait qu'un plateau tournant (12), entraîné pas-à-pas, comporte plusieurs dispositifs de réception (14) pour les corps creux soufflés, répartis uniformément sur la périphérie, et est susceptible d'être déplacé par une commande cadencée entre une position de prise en charge disposée dans le plan de séparation (E) de l'unité de fermeture du moule (10) et plusieurs postes consécutifs, parmi lesquels se trouve au moins un poste de post-traitement, que le poinçon de soufflage (66) transfère les corps creux soufflés de la position de soufflage à la position de prise en charge et est porté par un chariot (16) du poinçon de soufflage, qui est mobile, dans le plan de séparation (E) de l'unité de fermeture (10) du moule de soufflage, entre la position de soufflage et la position de prise en charge et est susceptible d'être indexé, dans le banc de machine (2), dans la position de soufflage, et que l'unité de fermeture (10) du moule de soufflage possède des guidages (52, 54) pour les supports (26a, 26b) des moules de soufflage, uniquement sur le côté qui est éloigné du chariot (16) du poinçon de soufflage.

2. Machine selon la revendication 1, caractérisée par le fait que le mouvement de l'unité de fermeture (10) du moule de soufflage, du chariot (16) du poinçon de soufflage et du plateau tournant (12) est dérivé positivement et par l'intermédiaire d'une transmission à cames combinées et fermées (84, 86, 92, 94, 96, 100, 102, 104), à partir d'une unité d'entraînement commune (82).

3. Machine selon la revendication 1, caractérisée par le fait que l'unité de fermeture (10) du moule de soufflage est soutenue, en direction verticale, par l'intermédiaire d'un dispositif hydropneumatique (32) d'équilibrage des poids.

4. Machine selon la revendication 1, caractérisée par le fait que les dispositifs de réception en deux parties, qui sont disposés sur le plateau tournant (12), sont constitués par des coquilles de moule (14) susceptibles d'être déplacées entre une position d'ouverture et une position de fermeture, coquilles qui sont subdivisées, dans la position de prise en charge (a), dans le plan de séparation (E) du dispositif de fermeture (10) du moule de soufflage.

5. Machine selon la revendication 4, caractérisée par le fait que les coquilles de moule (14) sont soumises à une tension préalable dans leur position de fermeture, à l'aide de ressorts (116) et sont susceptibles d'être déplacées dans leur position d'ouverture par un mécanisme de réglage (124, 126, 132, 133), mécanisme de réglage coagissant avec la trajectoire d'une came (130) disposée en position fixe et concentriquement au plateau tournant (12).

6. Machine selon la revendication 5, caractérisée par le fait que les moitiés (14a, 14b) des coquilles de moule sont remplaçables et sont montées sur des supports de coquilles (112a, 112b), avec réglage au moyen d'organes d'indexation supplémentaires (110).

7. Machine selon la revendication 6, caractérisée par le fait que les supports de coquilles (112a, 112b) sont montés, du côté qui est éloigné, dans la position de prise en charge (a), de l'unité de fermeture (10) du moule de soufflage, sur des guidages (114) prévus sur le plateau tournant (12).

8. Machine selon la revendication 7, caractérisée par le fait que les guidages (114) sont réalisés sous la forme de douilles de guidage (118) qui sont fendues sur leur côté qui est voisin des supports de coquilles (112a, 112b), chaque support de coquille pénétrant, par respectivement un bras, dans la douille de guidage (118), à travers la fente.

9. Machine selon la revendication 8, caractérisée par le fait qu'au moins les bras (120) des deux supports de coquilles (112a, 112b), qui pénètrent dans une douille de guidage (118) sont soumis, dans la position de fermeture, à une tension préalable à l'aide de ressorts de pression (116) qui sont disposés dans les douilles de guidage.

10. Machine selon la revendication 5, caractérisée par le fait que le profil (130) de la came possède une section (138) qui déplace le mécanisme de réglage (124, 126, 132, 133) dans la position d'ouverture, laquelle section s'étend d'une position de fourniture (e) pour les corps creux terminés jusqu'à immédiatement à l'avant de la position de prise en charge (a), étant noté que cette section (138) est susceptible, dans la position de transfert, d'être complétée par une section de came mobile (140) qui est susceptible d'être fixée par un verrou dans cette position qui complète la section (138) et qui, après suppression du verrou et sous l'action des ressorts (116) qui soumettent les supports de masques (112a, 112b) à une pression, dans leur position de fermeture, est susceptible d'être déplacée de sa position complémentaire de la section (138), à l'encontre de l'effet d'un organe de rappel (139).

11. Machine selon la revendication 1, caractérisée par le fait que l'unité de fermeture (10) du moule de soufflage comporte deux supports de moule (26a et 26b) mobiles l'un par rapport à l'autre dans le sens horizontal, que dans une console de guidage (28) sont montées, de façon à pouvoir s'y déplacer, deux tiges de guidage s'étendant horizontalement et parallèlement entre elles, et avec une certaine distance verticale entre elles, lesquelles tiges de guidage sont reliées de façon fixe avec l'un (26a) des supports de moule et sur lesquelles est monté, de façon déplaçable l'autre (26b) support de moule, et qu'à l'aide d'un cylindre de réglage (64) qui est monté sur la console de guidage (28) peut être réalisé un mouvement de sens contraire, par rapport à la console de guidage (28), des tiges de guidage (52, 54) et du support de moule (26b) monté sur la tige de guidage.

12. Machine selon la revendication 11, caractérisée par le fait que le cylindre de réglage (64) agit, par l'intermédiaire d'une construction (62a, 62b) à levier coudé, sur les tiges de guidage (52, 54) et sur un support de moule (26b).

13. Machine selon la revendication 2, caractérisée par le fait que la transmission à cames combinée comporte un arbre principal d'entraînement commun (84) auquel sont reliés en rotation les éléments de cames fermées sur elles-mêmes (86, 94, 104), pour en dériver de façon synchrone des mouvements de réglage.

14. Machine selon la revendication 13, caractérisée par le fait qu'avec l'arbre principal de commande (84) est relié un disque (86) qui comporte une came de levage (88) située à l'intérieur, et dans laquelle pénètre, sans jeu, un galet (90) qui est monté à une transmission par leviers (92) qui est reliée par son autre extrémité à l'unité de fermeture (10) du moule de soufflage.

15. Machine selon la revendication 13, caractérisée par le fait qu'à l'arbre principal d'entraînement (84) est relié un cylindre à came (94) dans lequel pénètre, sans jeu, un toc d'entraînement (96), l'allure de la came du cylindre à came (94) étant adaptée à produire un déplacement, dans un sens et dans l'autre, du toc d'entraînement (96), avec lequel est relié un levier oscillant (100) qui attaque le chariot du poinçon de soufflage (16).

16. Machine selon la revendication 13, caractérisée par le fait qu'à l'arbre principal d'entraînement (84) est relié un second cylindre à came (104), dans lequel pénètre, sans jeu, un second toc d'entraînement (102) qui est susceptible de tourner autour d'un axe vertical, l'allure de la came du cylindre à came (104) étant appropriée à déplacer le second toc d'entraînement (102) de pas uniformes, se complétant à 360° et par le fait que le toc d'entraînement supplémentaire (102) est en liaison d'entraînement avec le plateau tournant (12).

17. Machine selon la revendication 16, caractérisée par le fait que le toc d'entraînement supplémentaire (102) est relié au plateau tournant (12).

18. Machine selon l'une des revendications 1 et 13-17, caractérisée par le fait que l'arbre principal d'entraînement (84) est susceptible d'être entraîné, par l'intermédiaire d'une transmission à pignon à vis sans fin, à l'aide d'un moteur en courant continu à vitesse de rotation réglable et avec commande par thyristor.

19. Machine suivant la revendication 13, caractérisée par le fait que l'entraînement de l'arbre principal d'entraînement (84) est susceptible d'être arrêté après chaque rotation de l'arbre principal d'entraînement de 360°, et il est susceptible d'être redémarré en fonction d'un dispositif de temporisation réglable.

20. Machine selon la revendication 13, caractérisée par le fait que les éléments (86, 94, 104) de la transmission à came sont réalisés de telle façon que les mouvements qui en sont dérivés ne démarrent qu'après que l'arbre principal d'entraînement (84) est tourné d'un angle d'avance, et sont interrompus avant que l'arbre principal d'entraînement (84) ait tourné d'un angle de poursuite.

21. Machine selon la revendication 3, caractérisée par le fait que l'unité de fermeture (10) du moule de soufflage est appuyée sur un remplissage d'huile (40) qui se trouve dans un réservoir (34), remplissage d'huile qui à son tour est chargé par un coussin de gaz (48), la surface du remplissage d'huile qui forme appui pour l'unité de fermeture étant notablement inférieure à la surface chargée par le coussin de gaz.

22. Machine selon la revendication 21, caractérisée par le fait que l'unité de fermeture (10) du moule de soufflage prend appui sur le remplissage d'huile (40), par l'intermédiaire d'un piston (36) mobile dans un cylindre, que le remplissage d'huile est relié, par l'intermédiaire d'une conduite de liaison (42), à un accumulateur de pression (44) dans lequel l'huile est séparée d'un coussin de gaz (48) par un second piston (46) flottant et ayant une surface de piston notablement plus grande.

23. Machine selon l'une des revendications 21 ou 22, caractérisée par le fait que le coussin de gaz (48) est susceptible d'être complété à partir d'une réserve de gaz sous pression (50).

24. Machine selon la revendication 4, caractérisée par le fait que les masques de moulage (14) sont réalisés sous la forme de matrices pour un corps creux qui est à ébarber par une opération de découpage, matrices qui sont susceptibles d'être traversées dans le sens transversal par un poinçon d'ébarbage.

25. Machine selon la revendication 5, caractérisée par le fait que dans une station de post-traitement (d) est disposé un poinçon de contrôle pour le contrôle de l'étanchéité et qui est susceptible d'être placé sur le corps creux, dans le masque de moulage (14), poinçon de contrôle auquel est relié un coin d'écartement (144) qui est approprié à pénétrer entre les moitiés (14a, 14b) des masques de moulage et de les écarter quelque peu pendant l'opération de contrôle, à l'encontre de l'action des ressorts (116).

26. Machine selon la revendication 25, caractérisée par le fait qu'en fonction du mouvement du poinçon de contrôle est susceptible d'être déplacé un organe d'appui sous le fond du corps creux à contrôler.

27. Machine selon la revendication 1, caractérisée par le fait qu'en face de l'ouverture de soufflage (29) est réalisée dans le moule de soufflage (24) une seconde ouverture (31), et qu'à un support (16) est disposé un élément de soutien (33) qui est susceptible d'être introduit dans la seconde ouverture.

28. Dispositif de soufflage selon la revendication 27, caractérisé par le fait que l'élément de soutien (33) est réalisé sous la forme d'un poinçon.

29. Dispositif de soufflage selon la revendication 28, caractérisé par le fait que le poinçon est susceptible de tourner autour d'un axe qui est parallèle à la direction de son déplacement pour pénétrer ou sortir de la seconde ouverture (31).

30. Dispositif de soufflage selon la revendication 28, caractérisé par le fait que le poinçon (33) possède une section transversale ronde.

31. Dispositif de soufflage selon la revendication 28, caractérisé par le fait que le poinçon (33) s'amincit coniquement en direction de la seconde ouverture (31).

32. Dispositif de soufflage selon l'une des revendications 27-31, caractérisé par le fait que le support (16a, 16b) de l'élément de soutien (33) et un support (16) du poinçon de soufflage (66), sont susceptibles d'être déplacés en commun par rapport au poinçon de soufflage (24).

33. Dispositif de soufflage selon la revendication 32, caractérisé par le fait que le support (16) du poinçon de soufflage et des supports (16a, 16b) de l'élément de soutien, sont susceptibles d'être déplacés en commun dans le plan de séparation du moule.

34. Dispositif de soufflage selon la revendication 27, caractérisé par le fait qu'un dispositif de commande (77, 83) pour l'élément de soutien (33) et un dispositif de commande (70, 72) pour le poinçon de soufflage (66) sont reliés entre eux pour le déplacement en commun dans des sens opposés, du poinçon de soufflage (66) et de l'élément de soutien (33).

35. Machine selon l'une des revendications 1-3, caractérisée par le fait que les dispositifs de réception qui sont prévus sur le plateau tournant (12) sont constitués par des moules de soufflage final, en deux parties, à chacune desquelles est associé un chariot, guidé pour le poinçon de soufflage.

36. Machine selon la revendication 35, caractérisée par le fait que le chariot du moule de soufflage pour le moule de soufflage final est monté sur le plateau tournant (12) de façon à pouvoir y être déplacé radialement, et il est susceptible d'être entraîné par un levier de transmission en prise avec un disque à came.

37. Machine selon la revendication 36, caractérisée par le fait que le levage et l'abaissement du poinçon de soufflage pour le moule de soufflage du produit terminé, le début et la fin de l'opération de soufflage et la mise à l'atmosphère rapide sont commandés par des disques à cames montés sur l'axe du plateau tournant.

0 034 267

Fig. 1

Fig. 2

_Fig.3_

_Fig. 4_

Fig.5

*Fig.*6

*Fig.*8

Fig. 7

Fig. 9

*Fig.* 10

*Fig.* 11

Fig.12

_Fig._ 14

_Fig._ 13

_Fig._ 15

*Fig.16*

*Fig.17*

*Fig.* 18